(19) Europäisches Patentamt
European Patent Office
Office européen des brevets

(11) EP 4 067 402 B1

(12) EUROPEAN PATENT SPECIFICATION

(45) Date of publication and mention of the grant of the patent:
**25.10.2023 Bulletin 2023/43**

(21) Application number: **22164707.6**

(22) Date of filing: **28.03.2022**

(51) International Patent Classification (IPC):
***C08G 18/64*** *(2006.01)* ***C08H 8/00*** *(2010.01)*
***C08L 1/00*** *(2006.01)* ***C09K 21/14*** *(2006.01)*

(52) Cooperative Patent Classification (CPC):
(C-Sets available)
**C09K 21/14; C08G 18/1816; C08G 18/225; C08G 18/4081; C08G 18/4211; C08G 18/4825; C08G 18/4829; C08G 18/6484; C08G 18/7664; C08H 8/00; C08L 1/02;** C08J 2375/04; C08J 2401/02; C08J 2405/06; C08J 2489/00;

(Cont.)

# (54) DISPERSIONS OF PLANT-BASED SOLID PARTICLES IN LIQUID POLYOLS

DISPERSIONEN VON FESTSTOFFPARTIKELN AUF PFLANZLICHER BASIS IN FLÜSSIGEN POLYOLEN

DISPERSIONS DE PARTICULES SOLIDES À BASE DE PLANTES DANS DES POLYOLS LIQUIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2021 NL 2027850**

(43) Date of publication of application:
**05.10.2022 Bulletin 2022/40**

(73) Proprietor: **Coöperatie Koninklijke Cosun U.A.
4814 NE Breda (NL)**

(72) Inventors:
- **GRÜNBAUER, Henri J.M.
3822 TK Amersfoort (NL)**
- **RAAIJMAKERS, Henricus Wilhelmus Carolina
4708 NP Roosendaal (NL)**
- **LAZEROMS, Robert
4714 DA Sprundel (NL)**

(74) Representative: **Nederlandsch Octrooibureau
P.O. Box 29720
2502 LS The Hague (NL)**

(56) References cited:
**EP-A1- 0 682 050**
**EP-A1- 3 447 113**
**WO-A2-2004/011518**
**WO-A2-2018/002445**
**US-A- 4 481 076**

- **PAVIER C ET AL: "Urethanes and polyurethanes from oxypropylated sugar beet pulp - I. Kinetic study in solution", EUROPEAN POLYMER JOURNAL, PERGAMON PRESS LTD OXFORD, GB, vol. 36, no. 8, 1 August 2000 (2000-08-01) , pages 1653-1658, XP004195763, ISSN: 0014-3057, DOI: 10.1016/S0014-3057(99)00245-1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 067 402 B1

(52) Cooperative Patent Classification (CPC): (Cont.)
C08J 2497/00

C-Sets
**C08L 1/02, C08L 5/06, C08L 5/14, C08L 89/00, C08L 97/005**

## Description

### FIELD OF THE INVENTION

The invention relates to dispersions comprising liquid polyols and plant-based solid particles dispersed therein, to a process for producing said dispersions and to uses of said dispersions.

### BACKGROUND OF THE INVENTION

Polyurethanes are widely used polymers and are usually obtained from reaction between polyols and (poly)isocyanates. The production of other widely used polymers such as polyesters, polyamides, polyisocyanurates, polyethers, and polycarbonates also depends on polyols as a feedstock. The feedstocks used in the methods of producing these polymers are typically petroleum-dependent. This puts pressure on the source of raw materials because of environmental concerns. The finite nature of petroleum reserves makes it imperative to search for alternative and renewable sources of raw materials to produce these polymers.

Accordingly, there has been a growing interest in replacing at least part of the petroleum-based feedstocks used in the production of these polymers by alternative and renewable sources of raw materials. Renewable sources of raw materials that are of particular interest in this regard are biomass residues, e.g. obtained in agriculture or forestry, because of their abundant availability.

Sugar beet pulp is a by-product resulting from sugar extraction of sugar beets. Sugar beet pulp has not found many industrial applications, apart from its use as or in animal feed and in the production of biogas. This residue is obtained as a wet material with about 25 wt.% dry solids. It is insoluble in many solvents and therefore has very limited reactivity.

EP0682050A1 concerns a process for the production of polyurethane foams wherein at least part of the polyol is substituted with a powder of exhaust pulp of sugar beets. The sugar beet particles are described to be more than a filler in that they act as an active agent. The water inside the sugar beet pulp particles, 6-12 wt.%, is described to help foam forming.

In a first embodiment of EP0682050A1, ground exhausted sugar beet powder is used as such. It is described in EP0682050A1 that this sugar beet powder is practically insoluble and has low reactivity. As regards this first embodiment, it is stated that it is impossible to thoroughly mix the powdered solid, *i.e.* the powder of exhaust pulp of sugar beet, with the liquid viscous polyol. As a consequence the liquid polyol is first mixed with additives, such as catalysts, fillers and surfactants; and thereafter, on said mix, a layer of powdered solid is laid down. Example 1 ofEP0682050A1 is an example of the first embodiment wherein ground spent sugar beet particles with a particle size distribution characterized by particles having sizes between 0.2 and 0.5 mm are combined with (*i.e.* 'laid down on a layer of') polyol sorbitol in weight ratios of 1:1 to 3:1. It was concluded in EP0682050A1 that the foams obtained with the sugar beet particles therein had chemical-physical characteristics which were absolutely comparable to those of commercial foams.

EP0682050A1 discloses in a second embodiment reaction of sugar beet particles with propylene oxide to make the particles more soluble and reactive.

US2019/0119432A1 concerns the use of ground crop residues having an average particle size of less than 10 mm in polyurethane systems. The polyurethane systems comprise an isocyanate component and an isocyanate-reactive component. The average particle size of the ground crop residues (based on a number distribution model) can be less than 650 μm. Exemplary grindable crop residues include roots. The working examples disclose the production of polyurethane systems by hand-mixing of 100 parts by weight of a formulation system comprising a blend having at least a high functional polyether polyol, a low functional polyol, and additives such as a catalyst and blowing agent, 120 parts by weight of an isocyanate component and between 2.0 and 8.0 wt.%, based on the total weight of the polyurethane system, of sunflower hulls ground to an average particles size of less than 600 μm.

C. Pavier et al., European Polymer Journal, 36, 2000, pp 1653-1658, disclose polyurethanes produced from oxypropylated sugar beet pulp and isocyanates. The polyol compound consisted of oxypropylated sugar beet pulp in polypropylene oxide) diol.

A. Strąkowska *et al.*, *Materials,* 13, 2020, 5493, disclose rigid polyurethane foams reinforced with sugar beet pulp impregnated with aminopropylisobutyl-polyhedral oligomeric silsesquioxanes (APIB-POSS). Between 1 and 5 wt.% of impregnated sugar beet pulp was applied in the polyurethane foams. The addition was described to result in improved fire resistance. Polyurethane composite foams were synthesized by (i) alkali treatment of sugar beet pulp with a 5 wt.% solution of sodium hydroxide solution, washing with distilled water, neutralizing with a 1% acetic acid solution and drying, (ii), mixing the thus treated sugar beet pulp with aminopropylisobutyl-POSS (1:1 w/w) using a planetary ball mill, (iii) adding the mixture obtained in step (iii) to a polyol system, (iv) adding other ingredients, such as a surfactant, catalyst, and blowing agent, followed by mixed until complete dispersion of the impregnated sugar beet pulp, and (v) adding and mixing isocyanate. Steps (i) and (ii) result in impregnated sugar beet filler with very small particles sizes between about 0.5 and about 5 μm. It can be calculated that in step (iii), between 2.8 and 14 wt.% of impregnated sugar beet filler is applied in the polyol dispersion.

Z. Zheng et al., Int. J. Food Eng., 12(9), 2016, pp 911-919, disclose polyurethane foams prepared from microwave liquefied sugar beet pulp and polymethylene polyphenyl isocyanate. The liquefaction procedure comprised thoroughly mixing of sugar beet pulp (milled to a particle size of 75-380 μm and dried), PEG and sulfuric acid, subjecting the resulting mixture to microwave irradiation for 25 min at 500 W during which the temperature was controlled at 160 °C, cooling the product and neutralizing the liquefaction product using magnesium oxide.

I. Domingos et al., Food and Bioproducts Processing, 115, 2019, pp 223-229, disclose polyurethane foams from liquefied orange peel wastes. The liquefied orange peel waste was produced using a mixture of ethylene glycol and glycerol (1:1) as solvents, catalysed by sulphuric acid at 180 °C for 60 min. US4481076A1 discloses in sample 2 a dispersion prior to addition of water comprising: microfibrillated cellulose (MFC) (i.e. a plant based particle) and glycerin. Example 1 states that MFC pulp fibers are cut to a length of 0.7 mm. The MFC is prepared from southern pine which is known to have a lignin content of about 30 wt.%.

There is an ongoing need for low-cost fillers based on renewable resources that can be used to replace at least part of the polyols used in the production of polymers. There is further a need for simple carrier products that make the low-cost fillers based on renewable resources readily available for application in the production of said polymers.

It is therefore an object of the invention to provide simple carrier products that make fillers based on renewable resources readily applicable in the production of polymers based on polyols. It is a further object of the invention to provide said simple and stable carrier products wherein the fillers based on renewable resources are not chemically altered materials. It is yet another object of the invention to provide simple and stable polyol systems comprising fillers based on renewable resources for use in the production of polymers.

## SUMMARY OF THE INVENTION

The inventors have unexpectedly established that one or more of the objectives can be met by dispersing plant-based solid particles, that are not chemically modified and have a specific particle size in polyols and by applying a minimum content of solids of said plant-based solid particles such that the dispersion has a specific minimum viscosity.

Accordingly, in a first aspect, the invention provides a dispersion of a liquid continuous phase and solids dispersed therein, said dispersion consisting of:

(a) 50 - 95 wt.% of a liquid, based on the weight of the dispersion;
(b) 5-40 wt.% of plant-based solid particles, based on the weight of the dispersion; and
(c) 0 - 20 wt.% of one or more further ingredients other than (a) and (b), based on the total weight of the dispersion,

wherein the plant-based solid particles (b) comprise, based on dry matter of the solid particles (b), at least 70 wt.% of parenchymal cell wall material and less than 6 wt.% of lignin, wherein the plant-based solid particles (b) comprise, based on the weight of the solid particles (b), less than 7 wt.% of water,
wherein the plant-based solid particles (b) have a particle size distribution characterized by a D90 of 300 μm or smaller, as measured in accordance with dry powder laser diffraction, and wherein the liquid (a) consists of one or more polyol compounds.

The inventors found that the dispersions according to the invention having a high content of solids exhibit shear thinning behaviour with hysteresis (thixotropy). Accordingly, at sufficiently high content of solids, the plant-based solid particles (b) are stabilized in an internal network structure that can be broken down by shearing the dispersion. At low shear rates, the viscosity of the dispersions according to the invention is sufficiently high to reduce sedimentation of the solid particles (b) to acceptable levels. At high shear rates, the viscosity of the dispersions is sufficiently low to be able to process the dispersions, for example by pumping the dispersion to a reactor vessel.

The dispersions according the invention do exhibit sedimentation over time. This means that the dispersions may need to be homogenized, for example using gentle stirring, before applying them, for example in a polyurethane system. Although, the dispersions according to the invention exhibit thixotropic behaviour, the internal network is reformed sufficiently quick after a breakdown due to stirring to stabilize the dispersion again as regards sedimentation of the plant-based solid particles (b).

In general, it was found that dispersions having a viscosity of at least 20 Pa s at 20 °C and at a shear rate of 0.1 $s^{-1}$ exhibited sufficient stability against sedimentation.

In a second aspect, the invention provides a process for the production of the dispersion as defined hereinbefore, said process comprising:

(i) providing liquid (a);
(ii) adding the plant-based solids particles (b) and the optional one or more further ingredients (c); and
(iii) stirring the mixture obtained in step (ii) until a homogeneous dispersion is obtained.

A third aspect of the invention concerns the use of the dispersion as defined hereinbefore as a feedstock in a process for the production of a polymer.

The inventors have established that the plant-based solid particles (b) can impart flame retardant properties to polymers. There is no need to impregnate the plant-based solid particles (b) with e.g. APIB-POSS to obtain such an effect.

A fourth aspect of the invention concerns the use of the dispersion as defined hereinbefore as a flame retardant in a polymer.

## BRIEF DESCRIPTION OF THE FIGURES

Figures 1-3 graphically depict stability of the dispersions according to the invention and of comparative dispersions at room temperature (~20 °C) as a function of time.
Figures 4-9 graphically depict viscosity vs shear rate profiles of the dispersions according to the invention and of comparative dispersions at 20 °C.
Figure 10 graphically depicts thixotropic behaviour of a few dispersions according to the invention.

## DETAILED DESCRIPTION

In a first aspect, the invention concerns a dispersion of a liquid continuous phase and solids dispersed therein, said dispersion consisting of:

(a) 50 - 95 wt.% of a liquid, based on the weight of the dispersion;
(b) 5-40 wt.% of plant-based solid particles, based on the weight of the dispersion; and
(c) 0 - 20 wt.% of one or more further ingredients other than (a) and (b), based on the total weight of the dispersion,

wherein the plant-based solid particles (b) comprise, based on dry matter of the solid particles (b), at least 70 wt.% of parenchymal cell wall material and less than 6 wt.% of lignin,
wherein the plant-based solid particles (b) comprise, based on the weight of the solid particles (b), less than 7 wt.% of water,
wherein the plant-based solid particles (b) have a particle size distribution characterized by a D90 of 300 μm or smaller, as measured in accordance with dry powder laser diffraction, and
wherein the liquid (a) consists of one or more polyol compounds.

In a preferred embodiment, the dispersion consists of:

(a) 50 - 80 wt.% of the liquid, based on the weight of the dispersion;
(b) 20 - 40 wt.% of the plant-based solid particles, based on the weight of the dispersion; and
(c) 0 - 10 wt.% of the one or more further ingredients other than (a) and (b), based on the total weight of the dispersion.

In a preferred embodiment, the dispersion has a viscosity at 20 °C and at a shear rate of 0.1 $s^{-1}$ is at least 20 Pa s, as measured using a C-CC27/T200/SS 45971 measuring cup and a ST24-2D/2V/2V-30-SN26943 vane rotor.

Unless specified otherwise, all viscosities as defined herein are measured using a C-CC27/T200/SS 45971 measuring cup and a ST24-2D/2V/2V-30-SN26943 vane rotor.

As described hereinbefore, the dispersion is a dispersion of a liquid continuous phase with solid particles dispersed therein. This dispersion consists of a liquid (a), plant-based solid particles (b) and one more further ingredients (c) that are different form the liquid (a) and the plant-based solid particles (b).

As will be appreciated by the skilled person, the mere fact that the one more further ingredients (c) are different from the liquid (a) and the plant-based solid particles (b) does not mean that the one more further ingredients (c) cannot be liquid-like or cannot be solid particles.

As will be appreciated by those skilled in the art, the term *'plant-based solid particles'* as used herein refers to solid particles that consist of natural ingredients of the plant from which the particles are obtained. This means that the plant-based solid particles do not comprise plant ingredients that have been chemically modified. Accordingly, the plant-based solid particles do for example not comprise oxypropylated or liquefied plant pulp particles.

***Liquid (a)***

The dispersion comprises liquid (a) consisting of one or more polyol compounds. The term *'polyol compounds'* is also referred to in the art as *'polyhydric compounds'*. The term polyol compounds as used herein refers to organic compound wherein the individual molecules contain two or more hydroxyl groups. As will be appreciated by those skilled in the art, polyol compounds are obtained by chemical synthesis which typically is a statistical process. Consequently, polyol compounds typically have an average hydroxy functionality that is not exactly two or exactly three, but they have for example a real value in between. Accordingly the average hydroxy functionality of the polyol compounds in liquid (a) need not be an integer but typically is a real number. The average hydroxy functionality of the polyol compounds is preferably a real number between 1.9 and 7, such as a real number between 1.9 and 4. The average hydroxy functionality of the liquid (a) consisting of one or more polyol compounds is preferably a real number between 1.9 and 3.

The one or more polyol compounds constituting liquid (a) preferably have an hydroxyl number from 50 mg KOH/g to 550 mg KOH/g, more preferably 100 to 550 mg KOH/g, as measured in accordance with ASTM D4274 - 16. In an embodiment, liquid (a) consisting of one or more polyol compounds has an hydroxyl number from 50 mg KOH/g to 550 mg KOH/g, more preferably 100 to 550 mg KOH/g, as measured in accordance with ASTM D4274 - 16.

In an embodiment, liquid (a) consists of one or more polyol compounds having an average hydroxy functionality of 4 or lower and one or more polyol compounds having an average hydroxy functionality of higher than 4.

In an embodiment, liquid (a) consists of one or more polyol compounds having an average hydroxy functionality of between 1.9 and 4 and one or more polyol compounds having an average hydroxy functionality of between higher than 4 and 7.

The term *'liquid* in the context of '*liquid (a) consisting of one or more polyol compounds'* means that the one or more polyol compounds are liquid at temperatures above 5 °C.

Preferred examples of the one or more polyol compounds constituting liquid (a) are chosen from the group consisting of pentaerythritol, trimethylolpropane, glycols, (hydroxy alkylated) sugar alcohols, glycerine, (modified) polyether polyols (for example such as sold under the trade name Voranol™ by Dow Chemical Company, US), (modified) aliphatic and aromatic polyester polyols (for example such as sold under the trade name Stepanpol® by Stepan Company, US), polycarbonate polyols and polyols derived from plant-based natural oils.

Non-limiting examples of glycols are ethylene glycol, diethylene glycol, triethylene glycol, tetraethylene glycol, polyethylene glycol, propylene glycol, dipropylene glycol, tripropylene glycol, polypropylene glycol, neopentyl glycol, 1,3-propanediol, 1,3-butanediol, 1,4-butanediol, 1,6-hexanediol and 4-cyclohexanedimethanol.

Preferred examples of polyol compounds include diethylene glycol-phthalic anhydride-based polyester polyol (Stepanpol® PS-3152, average hydroxy functionality of 2.0), sucrose/glycerine initiated polyether polyol (Voranol™ RH 360, average hydroxy functionality of 4.5), polypropylene glycol (Voranol™ 1010 L, average hydroxy functionality of 2).

In a preferred embodiment, the liquid (a) consisting of the one or more polyol compounds has a viscosity of between 0.1 and 15 Pa·s at 20 °C and at a shear rate of 0.1 $s^{-1}$, as measured using a C-CC27/T200/SS 45971 measuring cup and a ST24-2D/2V/2V-30-SN26943 vane rotor. In a preferred embodiment, the liquid (a) consisting of the one or more polyol compounds has a viscosity of between 0.2 and 10 Pa·s, as measured at 20 °C and at a shear rate of 0.1 $s^{-1}$, as measured using a C-CC27/T200/SS 45971 measuring cup and a ST24-2D/2V/2V-30-SN26943 vane rotor.

In another embodiment, the liquid (a) consisting of the one or more polyol compounds has a viscosity of between 2 and 8 Pa·s, as measured at 20 °C and at a shear rate of 0.1 $s^{-1}$, as measured using a C-CC27/T200/SS 45971 measuring cup and a ST24-2D/2V/2V-30-SN26943 vane rotor. In yet another embodiment, the liquid (a) consisting of the one or more polyol compounds has a viscosity of between 0.1 and 3 Pa·s, as measured at 20 °C and at a shear rate of 0.1 $s^{-1}$, as measured using a C-CC27/T200/SS 45971 measuring cup and a ST24-2D/2V/2V-30-SN26943 vane rotor.

***Solid particles (b)***

The plant-based solid particles (b) comprise, based on dry matter of the solid particles (b), at least 70 wt.% of parenchymal cell wall material and less than 6 wt.% of lignin. The term *'parenchymal cell wall material"* is well known in the art. Parenchymal cell walls, which may also be denoted *'primary cell walls",* refer to the soft or succulent tissue, which is the most abundant cell wall type in edible plants. For instance, in sugar beets, the parenchymal cells are the most abundant tissue that surrounds the secondary vascular tissues (xylem and phloem). In this respect, reference is made to P.W. van der Poel et al., Sugar Technology, Verlag Dr Albert Bartens KG, Berlin 1998, page 211. Parenchymal cell walls contain relatively thin cell walls compared to secondary cell walls and are tied together by pectin. In secondary cell walls (xylem and phloem tissues), the cell walls are much thicker than parenchymal cells and are linked together with lignin. The plant-based solid particles (b) can thus be distinguished from for example wood pulp in their low lignin content.

Polysaccharides typically make up 90% or more of the primary plant cell walls, cellulose, hemicelluloses and pectins being the main constituents. The precise morphology and (chemical) make-up of parenchymal cell walls may vary from species to species. The parenchymal cell wall material in the plant-based solid particles (b) can be obtained from a variety of plant sources containing parenchymal cell walls.

In an embodiment, the parenchymal cell wall material is obtained from wet spent sugar beet pulp, wet pulp from citrus fruits, wet pulp from tomatoes, wet spent pulp from chicory, wet pulp from potatoes, wet pulp from pineapple, wet pulp from apple, wet pulp from cranberries, wet pulp from grapes, and/or wet pulp from carrots (exclusive of the stems and leaves), preferably obtained from wet spent sugar beet pulp and/or wet spent chicory pulp, more preferably obtained from wet spent sugar beet pulp, e.g. as a by-product of sucrose production.

In a preferred embodiment, the plant-based solid particles (b) are obtained from wet spent sugar beet pulp, wet pulp from citrus fruits, wet pulp from tomatoes, wet spent pulp from chicory, wet pulp from potatoes, wet pulp from pineapple, wet pulp from apple, wet pulp from cranberries, wet pulp from grapes, and/or wet pulp from carrots (exclusive of the stems and leaves), more preferably obtained from wet spent sugar beet pulp and/or wet spent chicory pulp, even more preferably obtained from wet spent sugar beet pulp, e.g. as a by-product of sucrose production.

In a very preferred embodiment, the plant-based solid particles (b) as defined hereinbefore are obtained by or obtainable by a process consisting of:

(A) drying wet spent sugar beet pulp, wet pulp from citrus fruits, wet pulp from tomatoes, wet spent pulp from chicory, wet pulp from potatoes, wet pulp from pineapple, wet pulp from apple, wet pulp from cranberries, wet pulp from grapes, and/or wet pulp from carrots (exclusive of the stems and leaves), more preferably obtained from wet spent sugar beet pulp and/or wet spent chicory pulp, even more preferably obtained from wet spent sugar beet pulp, during which the temperature of the pulp preferably does not exceed 95 °C;
(B) milling or comminuting the dried pulp obtained in step (A); and
(C) optionally subjecting the milled or comminuted dried pulp obtained in step (B) to sieving.

Since the plant-based solid particles (b) as defined hereinbefore are obtained by or obtainable by this process, step (A) results in the water content as defined hereinbefore and step (B) or combined steps (B) and (C) result in the particle size distribution as defined hereinbefore.

Preferably, the plant-based solid particles (b) comprise, based on the weight of the solid particles (b), less than 6.5 wt.% of water, more preferably less than 5.5 wt.%, even more preferably less than 5 wt.%, still more preferably less than 4.5 wt.%.

Since process steps (A) to (C) are presumed not to substantially affect the dry matter composition of the parenchymal cell wall containing plant material, it is believed that the plant-based solid particles (b) will have a dry matter composition largely corresponding to that of the untreated material or the pulp, having cellulose, pectin and hemicellulose as the main constituents.

Preferably the plant-based solid particles (b) comprise, based on dry matter of the solid particles (b), at least 15 wt.%, preferably 15-40 wt.%, more preferably 15-35 wt.%, most preferably 15-30 wt.% of cellulose.

Preferably the plant-based solid particles (b) comprise, based on dry matter of the solid particles (b), at least 15 wt.%, preferably 15-40 wt.%, more preferably 15-35 wt.%, most preferably 15-30 wt.% of pectin.

Preferably the plant-based solid particles (b) comprise, based on dry matter of the solid particles (b), at least 15 wt.%, preferably 15-40 wt.%, more preferably 15-35 wt.%, most preferably 20-35 wt.% of hemicellulose.

Other typical, non- or sparingly soluble, parenchymal cell (wall) constituents that may be present in the plant-based solid particles (b) include protein, lignin, residual sugars, fat and ash.

Hence, in an embodiment, the plant-based solid particles (b) comprise, based on dry matter of the solid particles (b), 1-25 wt.%, preferably 3-15 wt.%, of protein.

In an embodiment, the plant-based solid particles (b) comprise, based on dry matter of the solid particles (b), 0-5 wt.%, preferably 0-4 wt.%, more preferably 0-3 wt.%. of lignin.

In an embodiment, the plant-based solid particles (b) comprise, based on dry matter of the solid particles (b), less than 10 wt.%, preferably less than 6 wt.%, more preferably less than 3 wt.% of sugars.

In an embodiment, the plant-based solid particles (b) comprise, based on dry matter of the solid particles (b), less than 10 wt.%, preferably less than 6 wt.%, more preferably less than 3 wt.% of sugars.

In an embodiment, the plant-based solid particles (b) comprise, based on dry matter of the solid particles (b), less than 2 wt.%, preferably less than 1 wt.%, more preferably less than 0.5 wt.% of fat.

In an embodiment, the plant-based solid particles (b) comprise, based on dry matter of the solid particles (b), less than 6 wt.%, preferably less than 5 wt.%, more preferably less than 4 wt.% of ash.

In a preferred embodiment of the invention, the constituents of the plant-based solid particles (b) are similar to that of common spent sugar beet pulp, comprising, based on dry matter of the solid particles (b), 15-35 wt.%, preferably 15-30 wt.%, more preferably 18-26 wt.% cellulose, 15-40 wt.%, preferably 20-38 wt.%, more preferably 22-35 wt.% hemicellulose, 15-35 wt.%, preferably 20-30 wt.%, more preferably 21-27 wt.% pectin, 5-15 wt.% protein, less than 5 wt.% lignin, less than 5 wt.% sugars, less than 6 wt.% of ash and less than 1 wt.% fat.

In a preferred embodiment, the plant-based solid particles (b) essentially consist of fragments comprising clusters of collapsed/ruptured parenchymal cells, presumably with the cell wall structures largely or completely intact, *i.e.* at the primary, secondary and tertiary level.

As described hereinbefore, the particle size distribution of the plant-based solid particles (b) is determined by dry powder laser diffraction. Accordingly, the particle diameter characteristics D10, D50 and D90 are based on a volume distribution and the median particle diameter D50 is a volume median. The median particle diameter D50 is the diameter where half of the population of the plant-based solid particles (b) lies below. This volume median particle diameter is often referred to in the art as Dv50 or $D_{v0.5}$. The diameters D10 and D90 are often referred to in the art as Dv10 or $D_{v0.1}$ and Dv90 or $D_{v0.9}$, respectively. The D10 diameter is the diameter where 10% of the population of the plant-based solid particles (b) lies below. Similarly, the D90 diameter is the diameter where 90% of the population of the plant-based particles (b) lies below.

As described hereinbefore, the plant-based solid particles (b) have a particle size distribution characterized by a D90 of 300 μm or smaller, as measured with dry powder laser diffraction. As will be appreciated by the skilled person the wording *'of xx μm or smaller"* is identical to *'equal to or less than xx μm'.*

In a preferred embodiment, the plant-based solid particles (b) have a particle size distribution characterized by a D90 of 300 μm or smaller, a D50 of 150 μm or smaller and a D10 of 50 μm or smaller, such as a particle size distribution characterized by a D90 of between 155 and 300 μm, a D50 of between 55 and 150 μm and a D10 of between 5 and 50 μm, as measured with dry powder laser diffraction.

In another preferred embodiment, the plant-based solid particles (b) have a particle size distribution characterized by a D90 of 300 μm or smaller, a D[3,2] between 25 and 65 μm and a D[4,3] between 80 and 160 μm, as measured with dry powder laser diffraction.

In a more preferred embodiment, the plant-based solid particles (b) have a particle size distribution characterized by a D90 of 280 μm or smaller, a D50 of 130 μm or smaller and a D10 of 30 μm or smaller, such as a particle size distribution characterized by a D90 of between 135 and 280 μm, a D50 of between 35 and 130 μm and a D10 of between 5 and 30 μm, as measured with dry powder laser diffraction.

In another more preferred embodiment, the plant-based solid particles (b) have a particle size distribution characterized by a D90 of 280 μm or smaller, a D[3,2] between 30 and 60 μm and a D[4,3] between 90 and 140 μm, as measured with dry powder laser diffraction.

In an even more preferred embodiment, the plant-based solid particles (b) have a particle size distribution characterized by a D90 of 265 μm or smaller, a D50 of 110 μm or smaller and a D10 of 25 μm or smaller, such as a particle size distribution characterized by a D90 of between 115 and 280 μm, a D50 of between 30 and 110 μm and a D10 of between 5 and 25 μm.

In another even more preferred embodiment, the plant-based solid particles (b) have a particle size distribution characterized by a D90 of 265 μm or smaller, a D[3,2] between 35 and 55 μm and a D[4,3] between 105 and 135 μm, as measured with dry powder laser diffraction.

In embodiments, the amount of plant-based solid particles (b) is 20 - 39 wt.%, 20 - 38 wt.%, 20 - 37 wt.%, 20 - 36 wt.% or 20 - 35 wt.%, based on the total weight of the dispersion.

In other embodiments, the amount of plant-based solid particles (b) is 22 - 40 wt.%, 25-40 wt.%, 26 - 40 wt.%, 27 - 40 wt.%, 28 - 50 wt.%, 29 - 40 wt.%, or 30 - 40 wt.%, based on the total weight of the dispersion.

## ***Further ingredients***

As described hereinbefore, the dispersion comprises 0 - 20 wt.% of one or more further ingredients other than liquid (a) and plant-based solid particles (b), based on the total weight of the dispersion. In a very preferred embodiment, the dispersion comprises 0-10 wt.% of one or more further ingredients other than liquid (a) and plant-based solid particles (b), based on the total weight of the dispersion.

As will be appreciated by the skilled person, the mere fact that the one or more further ingredients (c) are different from the liquid (a) and the plant-based solid particles (b) does not mean that the one or more further ingredients (c) cannot be liquid-like or cannot be solid particles.

Preferred examples of the one more further ingredients (c) are selected from the group consisting of dyes, pigments, dispersants, surfactants, catalysts, porogenic agents, fillers, water-binding agents, water, anti-foaming agents, flame retardants, UV stabilizers, antioxidants, adhesion promoters, plasticizers, thickeners and rheology modifiers. More preferred examples of the one more further ingredients (c) are selected from the group consisting of dyes, pigments, flame retardants, catalysts, dispersants and surfactants. Even more preferred examples of the one more further ingredients (c) are selected from the group consisting of catalysts, dispersants and surfactants. In a very preferred embodiment, the one or more further ingredients other than (a) and (b) comprise a dispersant.

Pigments are examples of the one more further ingredients that take the form of solid particles. Surfactants and dispersants are examples of the one more further ingredients that may, at least partly, dissolve in the liquid (a) to constitute together with liquid (a) the liquid continuous phase of the dispersion. Surfactants and dispersants may however also, at least partly, physically attach to or adsorb onto the surface of solid particles. Dyes, anti-foaming agents, flame retardants, thickeners and rheology modifiers are examples of the one more further ingredients that preferably dissolve in the liquid (a) to constitute together with liquid (a) the liquid continuous phase of the dispersion.

In a very preferred embodiment the one or more further ingredients do not include tris(2-chloroisopropyl)phosphate (TCPP) and/or aminopropylisobutyl-polyhedral oligomeric silsesquioxanes (APIB-POSS).

If the one or more further ingredients comprise solid particles, these solid particles preferably have a particle size distribution characterized by a D90 of less than 300 μm, more preferably less than 250 μm, even more preferably less than 200 μm, still more preferably less than 175 μm, as measured with laser diffraction.

In embodiments, the amount of the one or more further ingredients (c) is 0 - 18 wt.%, 0 - 16 wt.%, 0 - 14 wt.%, 0 - 12 wt.%, 0-10 wt.%, 0 - 9 wt.%, 0 - 8 wt.%, 0 - 7 wt.% or 0 - 6 wt.%, based on the total weight of dispersion.

In other embodiments, the amount of the one or more further ingredients (c) is 0.05 - 20 wt.%, 0.1 - 20 wt.%, 0.2 - 20 wt.%, 0.5 - 20 wt.%, 1 - 20 wt.% or 1.5 - 20 wt.%, based on the total weight of the dispersion.

In still other embodiments, the amount of the one or more further ingredients (c) is 0.05 - 18 wt.%, 0.1 - 16 wt.%, 0.2 - 14 wt.%, 0.3 - 12 wt.%, 0.4 - 10 wt.% or 0.5 - 8 wt.%, based on the total weight of the dispersion.

In embodiments, the amount of the one or more further ingredients (c) is 0 - 9 wt.%, 0 - 8 wt.%, 0 - 7 wt.%, 0 - 6 wt.%, 0 - 5 wt.%, 0 - 4.5 wt.%, 0 - 4 wt.%, 0 - 3.5 wt.% or 0 - 3 wt.%, based on the total weight of dispersion.

In other embodiments, the amount of the one or more further ingredients (c) is 0.05 - 10 wt.%, 0.1 - 10 wt.%, 0.2 - 10 wt.%, 0.5 - 10 wt.%, 1 - 10 wt.% or 1.5 - 10 wt.%, based on the total weight of the dispersion.

In still other embodiments, the amount of the one or more further ingredients (c) is 0.05 - 9 wt.%, 0.1 - 8 wt.%, 0.2 - 7 wt.%, 0.3 - 6 wt.%, 0.4 - 5 wt.% or 0.5 - 4.5 wt.%, based on the total weight of the dispersion.

### ***Liquid continuous phase***

The liquid continuous phase of the dispersion is formed by the liquid (a), by any liquid further ingredient (c) that is added to it and further by any further ingredient that dissolves in liquid (a).

### ***Dispersed phase***

The dispersed phase of the dispersion is formed by solid particles (b), by any further ingredient (c) in particulate form and further by any further ingredient (c) that physically adsorbs onto the solid particles (b) and/or onto any further ingredient (c) in particulate form.

In a preferred embodiment, the dispersed phase of the dispersion is formed by solid particles (b) with dispersant adsorbed thereon.

In a preferred embodiment, the dispersion as defined hereinbefore consists of:

(a) 50 - 90 wt.% of the liquid, based on the weight of the dispersion;
(b) 5-40 wt.% of the plant-based solid particles, based on the weight of the dispersion; and
(c) 5-20 wt.% of the one or more further ingredients other than (a) and (b), based on the total weight of the dispersion, of which 5-20 wt.%, based on the total weight of the dispersion, is a dispersant.

In a more preferred embodiment, the dispersion as defined hereinbefore consists of:

(a) 50 - 85 wt.% of the liquid, based on the weight of the dispersion;
(b) 10 - 35 wt.% of the plant-based solid particles, based on the weight of the dispersion; and
(c) 5-20 wt.% of the one or more further ingredients other than (a) and (b), based on the total weight of the dispersion, of which 5-20 wt.%, based on the total weight of the dispersion, is a dispersant.

In an even more preferred embodiment, the dispersion as defined hereinbefore consists of:

(a) 50 - 80 wt.% of the liquid, based on the weight of the dispersion;
(b) 15 - 35 wt.% of the plant-based solid particles, based on the weight of the dispersion; and
(c) 5-15 wt.% of the one or more further ingredients other than (a) and (b), based on the total weight of the dispersion, of which 5-15 wt.%, based on the total weight of the dispersion, is a dispersant.

### ***Rheological behaviour and stability of the dispersion***

Fluid materials, by definition, are systems which flow when subjected to stress. How they respond to an input stress is the heart of rheological testing. In general, when a material has a uniform phase, such as a solution or pure substance, it is referred to as a simple fluid. Materials which contain more than one phase, such as solid particles dispersed in a liquid, are considered structured fluids since their rheological behaviour is in general dominated by the interactions of the constituents.

Many factors may affect the stability of structured fluids. The viscosity of the liquid phase in dispersions usually plays an important role on the flow properties of the material. Dispersions have wide variations in performance depending on particle size, shape, concentration, and any interaction of the dispersed particles with the continuous phase in which they are suspended.

Nearly all structured fluids have a viscosity that drops at higher shear rates. This is the phenomenon of shear thinning which becomes more pronounced as the volume concentration of solid particles increases.

For many fluid materials, viscosity is mostly independent of time, and is only a function of the shear rate and temperature. For concentrated dispersions, however, the viscosity often does not reach a steady value for some time upon application of shear rate. This steady state is dependent on the stabilization of internal network structures that can be broken down by shearing, and require time to rebuild. Upon ceasing the shear rate which caused the breakdown, the material reforms its internal network, and the viscosity recovers. The ability of a fluid material to exhibit shear thinning with increased shear rate and time-dependent recovery with decreasing shear rate is called *'thixotropy'*. Thus, thixotropic materials lose structure during shear, and rebuild it on standing.

Therefore, viscosity of dispersions, or structured fluids in general, should be measured not only as a function of increasing shear rate while the structure is broken down but also as a function of decreasing shear rate while the system recovers its structure. If the recovery is fast, the plot of viscosity as a function of decreasing shear rate would be superimposed on the plot of viscosity as a function of increasing shear rate. However, in thixotropic systems it takes time for the fluid to restore its structure and therefore the 'down curve' lies below the 'up curve'. This phenomenon is known as the *'hysteresis effect'.*

As described hereinbefore, the dispersions as described herein need to be sufficiently stable as regards sedimentation of the plant-based solid particles (b). The dispersion should be homogeneous for a sufficiently long time to be able to homogeneously mix it with further ingredients that are required for the intended application. For example, the dispersion should be homogeneous for a sufficiently long time to be able to homogeneously mix it with isocyanates to provide a homogeneous distribution of the plant-based solid particles (b) in the reaction mixture and in the final polyurethane.

The inventors found that the dispersions according to the invention having a high content of solids exhibit shear thinning behaviour with hysteresis (thixotropy). Accordingly, at sufficiently high content of solids, the plant-based solid particles (b) are stabilized in an internal network structure that can be broken down by shearing the dispersion. At low shear rates, the viscosity of the dispersions according to the invention is sufficiently high to reduce sedimentation of the solid particles (b) to acceptable levels. At high shear rates, the viscosity of the dispersions is sufficiently low to be able to process the dispersions, for example by pumping the dispersion to a reactor vessel. In this respect, reference is made to the appended examples.

The dispersions according the invention do exhibit sedimentation over time. This means that the dispersions may need to be homogenized, for example using gentle stirring, before applying them, for example in a polyurethane system. Although, the dispersions according to the invention exhibit thixotropic behaviour, the internal network is reformed sufficiently quick after a breakdown due to stirring to stabilize the dispersion again as regards sedimentation of the plant-based solid particles (b). In this respect, reference is made to the appended examples.

It was, however, found that the degree of shear thinning and hysteresis strongly depends on the content of the plant-based solid particles (b) in the dispersion and on the viscosity of the liquid (a). Higher loads of plant-based solid particles (b) resulted in more stable dispersions. The appended examples show that for a liquid (a) having a viscosity of about 0.2 Pa s, more than 30 wt.% of plant-based solid particles (b) are needed to provide sufficient dispersion stability as regards sedimentation. For a liquid (a) having a viscosity of about 5 Pa s, more than 20 wt.% of solid particles (b) were needed to provide sufficient dispersion stability as regards sedimentation.

In general, it was found that dispersions having a viscosity of at least 20 Pa·s at 20 °C and at a shear rate of 0.1 $s^{-1}$ exhibited sufficient stability against sedimentation.

In a preferred embodiment, the dispersion as defined hereinbefore has a viscosity at 20 °C and at a shear rate of 0.1 $s^{-1}$ of at least 20 Pa·s.

In a very preferred embodiment, a dispersion of a liquid continuous phase and solids dispersed therein as defined hereinbefore is provided, said dispersion consisting of:

(a) 50 - 80 wt.% of a liquid, based on the weight of the dispersion;
(b) 20 - 40 wt.% of plant-based solid particles, based on the weight of the dispersion; and
(c) 0 - 10 wt.% of one or more further ingredients other than (a) and (b), based on the total weight of the dispersion,

wherein the plant-based solid particles (b) comprise, based on dry matter of the solid particles (b), at least 70 wt.% of parenchymal cell wall material and less than 6 wt.% of lignin, wherein the plant-based solid particles (b) comprise, based on the weight of the solid particles (b), less than 7 wt.% of water,
wherein the plant-based solid particles (b) have a particle size distribution characterized by a D90 of 300 μm or smaller, as measured in accordance with dry powder laser diffraction, wherein the liquid (a) consists of one or more polyol compounds, and
wherein the viscosity of the dispersion at 20 °C and at a shear rate of 0.1 $s^{-1}$ is at least 20 Pa s, as measured using a C-CC27/T200/SS 45971 measuring cup and a ST24-2D/2V/2V-30-SN26943 vane rotor.

In preferred embodiments, the dispersion as defined hereinbefore has a viscosity at 20 °C and at a shear rate of 0.1 $s^{-1}$ of at least 25 Pa s, at least 30 Pa·s, at least 40 Pa·s, at least 50 Pa·s, at least 75 Pa s, or at least 100 Pa s.
In other preferred embodiments, the dispersion as defined hereinbefore has a viscosity at 20 °C and at a shear rate of 0.1 $s^{-1}$ of between 20 and 1500 Pa·s, of between 25 and 1500 Pa·s, between 30 and 1500 Pa s, between 40 and 1500 Pa s, between 50 and 1500 Pa s, between 75 and 1500 Pa s, or between 100 and 1500 Pa s.
In still other preferred embodiments, the dispersion as defined hereinbefore has a viscosity at 20 °C and at a shear rate of 0.1 $s^{-1}$ of between 25 and 1400 Pa s, between 25 and 1200 Pa·s, between 25 and 1000 Pa·s, between 25 and 800 Pa·s, between 25 and 600 Pa·s, or between 25 and 400 Pa·s.
In preferred embodiments, the dispersion as defined hereinbefore has a viscosity at 20 °C of (i) at least 20 Pa s at a shear rate of 0.1 $s^{-1}$ and between 0.5 and 17 Pa s at a shear rate of 1000 $s^{-1}$; (ii) at least 25 Pa s at a shear rate of 0.1 $s^{-1}$ and between 1 and 20 Pa s at a shear rate of 1000 $s^{-1}$; (iii) at least 30 Pa s at a shear rate of 0.1 $s^{-1}$ and between 1.5 and 25 Pa·s at a shear rate of 1000 $s^{-1}$; (iv) at least 40 Pa s at a shear rate of 0.1 $s^{-1}$ and between 2 and 30 Pa s at a shear rate of 1000 $s^{-1}$; (v) at least 50 Pa·s at a shear rate of 0.1 $s^{-1}$ and between 2 and 35 Pa·s at a shear rate of 1000 $s^{-1}$; (vi) at least 75 Pa·s at a shear rate of 0.1 $s^{-1}$ and between 2 and 40 Pa·s at a shear rate of 1000 $s^{-1}$; (vii) at least 100 Pa·s at a shear rate of 0.1 $s^{-1}$ and between 2 and 45 Pa s at a shear rate of 1000 $s^{-1}$; (viii) between 20 and 1500 Pa s at a shear rate of 0.1 $s^{-1}$ and between 0.5 and 100 Pa·s at a shear rate of 1000 $s^{-1}$; (ix) between 20 and 1400 Pa·s at a shear rate of 0.1 $s^{-1}$ and between 0.5 and 95 Pa s at a shear rate of 1000 $s^{-1}$; (x) between 20 and 1200 Pa s at a shear rate of 0.1 $s^{-1}$ and between 0.5 and 90 Pa s at a shear rate of 1000 $s^{-1}$; (xi) between 20 and 1000 Pa·s at a shear rate of 0.1 $s^{-1}$ and between 0.5 and 85 Pa·s at a shear rate of 1000 $s^{-1}$; (xii) between 20 and 800 Pa s at a shear rate of 0.1 $s^{-1}$ and between 0.5 and 80 Pa s at a shear rate of 1000 $s^{-1}$; (xiii) between 20 and 600 Pa s at a shear rate of 0.1 $s^{-1}$ and between 0.5 and 75 Pa s at a shear rate of 1000 $s^{-1}$; or (xiv) between 20 and 400 Pa s at a shear rate of 0.1 $s^{-1}$ and between 0.5 and 70 Pa·s at a shear rate of 1000 $s^{-1}$.

***Process for the preparation of the dispersion***

A second aspect of the invention concerns a process for the production of the dispersion as defined hereinbefore, said process comprising:

(i) providing liquid (a);
(ii) adding the plant-based solids particles (b) and the optional one or more further ingredients (c); and
(iii) stirring the mixture obtained in step (ii) until a homogeneous dispersion is obtained.

This process is preferably performed at a temperature between 5 and 50 °C, more preferably between 15 and 35 °C.
The one or more further ingredients (c) can be added to liquid (a) before or after addition of the plant-based solids particles (b) to liquid (a). Since addition of the plant-based solids particles (b) to liquid (a) increases the viscosity, addition of the one or more further ingredients (c) to liquid (a) prior to addition of the plant-based solids particles (b) is preferred.
Step (ii) can also comprise a step of adsorbing a dispersant (as further ingredient) onto the plant-based solids particles (b) and then adding the resulting plant-based solids particles (b) with dispersant adsorbed thereon to the liquid (a) provided in step (i).

***Uses***

A third aspect of the invention concerns the use of the dispersion as defined hereinbefore as a feedstock in a process for the production of a polymer.
This third aspect of the invention can also be worded as a process for the production of a polymer using the dispersion as defined hereinbefore as a feedstock.
In a preferred embodiment, this aspect concerns the use of the dispersion as a flame retardant in a process for the production of a polymer.

A fourth aspect of the invention concerns the use of the dispersion as defined hereinbefore as a flame retardant in a polymer.

In a preferred embodiment, the polymer is chosen from the group consisting of polyurethanes, polyisocyanurates, polyesters, polyethers, polycarbonates and polyamides.

In another preferred embodiment, the polyurethanes are polyurethane foams or polyurethane adhesives.

Thus, the invention has been described by reference to certain embodiments discussed above.

Furthermore, for a proper understanding of this document and its claims, it is to be understood that the verb *'to comprise"* and its conjugations are used in its non-limiting sense to mean that items following the word are included, but items not specifically mentioned are not excluded. In addition, reference to an element by the indefinite article *'a'* or *'an'* does not exclude the possibility that more than one of the element is present, unless the context clearly requires that there be one and only one of the elements. The indefinite article *'a'* or *'an'* thus usually means *'at least one'.*

## EXAMPLES

### Measurement protocols

The following analytical protocols were applied in the examples.

*Measurement of the viscosity and hysteresis*

The dynamic viscosity and hysteresis of samples was measured at 20 °C using a cup and vane rotor relative geometry at a shear rate of between 0.1 $s^{-1}$ and 1000 $s^{-1}$.

More particularly, a Physica MCR301 rheometer (Anton Paar, Germany) with a stainless steel C-CC27/T200/SS 45971 measuring cup (diameter 28.918 mm) and a ST24-2D/2V/2V-30-SN26943 vane rotor was used.

The dynamic viscosity of the different polyols at 20 °C was determined by incrementally increasing the shear rate from 0.1 $s^{-1}$ to 1000 $s^{-1}$ in 22 steps that are equidistant on a log scale, to obtain the dynamic viscosity at 23 different shear rates.

The dynamic viscosity and hysteresis of samples at 20 °C was measured by the following subsequent steps:

(i) stirring the sample to get a good dispersion;
(ii) filling the cup with the dispersion;
(iii) waiting 25 seconds before starting the measurements;
(iv) measuring the viscosity by incrementally increasing the shear rate from 0.1 $s^{-1}$ to 1000 $s^{-1}$ in 22 steps that are equidistant on a log scale to obtain the dynamic viscosity at 23 different shear rates; and
(v) measuring the viscosity again by incrementally decreasing the shear rate from 1000 $s^{-1}$ to 0.1 $s^{-1}$ in 22 steps that are equidistant on a log scale to obtain the dynamic viscosity at 23 different shear rates.

*Measurement of thixotropic behaviour*

Thixotropic behaviour was tested by subsequently applying three shear rate regimes and by measuring the viscosity at 20 °C as a function of time using a Physica MCR301 rheometer (Anton Paar, Germany) with a stainless steel C-CC27/T200/SS 45971 measuring cup (diameter 28.918 mm) and a ST24-2D/2V/2V-30-SN26943 vane rotor.

The detailed protocol comprises the following steps:

(i) stirring the sample to get a good dispersion;
(ii) filling the cup with the dispersion;
(iii) pre-shear the sample at a shear rate of 1 $s^{-1}$ for 30 seconds;
(iv) measuring, in a first regime, the viscosity at a shear rate of 1 $s^{-1}$ for 2 minutes at a sampling interval of 1 second;
(v) measuring, in a second regime, the viscosity at a shear rate of 200 $s^{-1}$ for 1 minute at a sampling interval of 1 second; and
(vi) measuring, in a third regime, the viscosity again at a shear rate of 1 $s^{-1}$ for 10 minutes at a sampling interval of 1 second.

*Measurement of dispersion stability*

Stability of the dispersions was tested by measuring turbidity at room temperature (~20 °C) as a function of time in a Turbiscan® LAB™ using Turbisoft 2.0, Formulaction, France. The stability of the dispersions was measured by the following subsequent steps:

(i) gently shake the dispersion to be analysed;
(ii) take a new measuring cell with a cap (both disposable parts of the Turbiscan® LAB™);
(iii) place the measuring cell in the provider holder of the Turbiscan® LAB™;
(iv) fill the measuring cell with about 20 ml of the dispersion obtained in step (i);
(v) close the measuring cell with the cap;
(vi) measure the transmission and backscattering of the measuring cell as a function of time and height in the measuring cell and compute the Turbiscan® Stability Index (TSI) in the top part of the measuring cell from these data using Turbisoft 2.0 software.

The TSI [-] is calculated from transmission and backscattering signals. It sums up all the variations in the sample, to give as a result a unique number reflecting the destabilization of a given sample. The higher the TSI, the stronger is the destabilization in the sample.

*Measurement of particle size*

The particle size distribution was measured with dry powder laser diffraction, more particularly with a Malvern Mastersizer 3000 equipped with an Aero S automated dry powder dispersion unit. The specific settings were: air pressure 3.5, feed rate 90, refractive index 1.53, particle density 1 and absorption index 0.1.

Using dry powder laser diffraction, D10, D50, D90, D[3,2] and [D4,3] values were obtained.

*Measurement of moisture content*

Moisture (water) content of the solid particles was determined by measuring the loss of mass on drying using the following protocol:

(i) dry a container for at least 30 minutes at 105 °C;
(ii) place the container in a desiccator and cool the container during 30 minutes, wherein the valve of the desiccator is open during the first 5 minutes and is closed during the following 25 minutes;
(iii) Measure the weight of the empty container (accuracy 0.1 mg, weight=G1);
(iv) Fill the container with about 5 gram of the sample and measure the weight of the filled container (accuracy 0.1 mg, weight=G2);
(v) Subject the filled container to 3 hours of drying in a drying chamber at 105 °C;
(vi) Cool the filled container during 30 minutes in a desiccator, wherein the valve of the desiccator is open during the first 5 minutes and is closed during the following 25 minutes;
(vii) Measure the weight of the filled container after drying (accuracy 0.1 mg, weight=G3);
(viii) Perform duplo measurement; and
(ix) Calculate the moisture content (wt.%) of the solid particles from:

$$(G2 - G3) / (G2 - G1) * 100\%.$$

**Materials**

The following materials were applied in the examples.

*Plant-based solid particles (b)*

- Milled dry wood chips from pinewood. The milled wood chips from pine wood were sieved using a sieve with 100 μm sieve openings (Retsch, Germany). The fraction passing the sieve (<100 μm) was used in the examples.
- BetaBind-A®, batch no 120432, obtained from Cosun Beet Company, The Netherlands. The particle size distribution of BetaBind-A® was measured in accordance with the protocol as defined hereinbefore. Characteristics are presented in Table 1. BetaBind-A® is obtained by drying and milling spent sugar beet pulp. No additives or chemicals are used during its preparation from spent sugar beet pulp. BetaBind-A® had a water content of 4.06 wt.%, as measured in accordance with the protocol as defined hereinbefore. Betabind-A® mainly comprises parenchymal cell wall materials. More in particular, Betabind-A® comprises, based on dry matter, 15-35 wt.% cellulose, 22-35 wt.%, hemicellulose, 20-30 wt.%, pectin, less than 5 wt.% lignin, 5-15 wt.% protein, less than 5 wt.% sugars, less than 1 wt.% fat and less than 6 wt.% ash.

- BetaBind-A® Small fraction. This small particles fraction was obtained using sieving of BetaBind-A®. The small particles fraction was the fraction passing a 212 μm sieve (Retsch, Germany). The particle size distribution of 'BetaBind-A® Small fraction' was measured in accordance with the protocol as defined hereinbefore. Characteristics are presented in Table 1. 'BetaBind-A® Small fraction' had a water content of 2.93 wt.%, as measured in accordance with the protocol as defined hereinbefore.
- BetaBind-A® Large fraction. This large particles fraction was obtained using sieving of BetaBind-A®. The large particles fraction was the fraction passing a 355 μm sieve (Retsch, Germany) and being left on a 212 μm sieve (Retsch, Germany). The particle size distribution of 'BetaBind-A® Large fraction' was measured in accordance with the protocol as defined hereinbefore. Characteristics are presented in Table 1. 'BetaBind-A® Large fraction' had a water content of 3.46 wt.%, as measured in accordance with the protocol as defined hereinbefore.

Table 1:

| Sample | D10 [μm] | D50 [μm] | D90 [μm] | D[3,2] [μm] | D[4,3] [μm] |
|---|---|---|---|---|---|
| BetaBind-A® | 26.8 | 330 | 890 | 59.5 | 395 |
| 'BetaBind-A® Small fraction' | 22.7 | 105 | 253 | 43.1 | 123 |
| 'BetaBind-A® Large fraction' | 202 | 330 | 524 | 203 | 348 |

*Liquid (a): polyols*

- Polyol A: Stepanpol® PS-3152, obtained from Stepan Company, US.
  This is a diethylene glycol-phthalic anhydride-based polyester polyol, having an average molecular weight of 174 g/mol and an average hydroxy functionality of 2.0. Polyol A has a hydroxyl number of 300-330 mg KOH/g and a viscosity at 25 °C (as measured by Stepan Company) of 2.677 Pa·s. The viscosity of polyol A at 20 °C, as measured with the protocol as defined hereinbefore, showed Newtonian behaviour and was about 4.9 Pa·s.
- Polyol B: Voranol™ RH 360, obtained from Dow Chemical Company, US.
  This is a sucrose/glycerine initiated polyether polyol, having an average hydroxy functionality of 4.5. Polyol B has a hydroxyl number of 345-375 mg KOH/g as measured using ASTM D4274-94d and a viscosity at 25 °C (as measured by Dow Chemical Company) of between 2.5 and 3.5 Pa·s, as measured using ASTM D445-94. The viscosity of polyol B at 20 °C, as measured with the protocol as defined hereinbefore, showed Newtonian behaviour and was about 5.2 Pa·s.
- Polyol C: Voranol™ 1010 L, obtained from Dow Chemical Company, US.
  This polyol is a polypropylene glycol (propyleneglycol initiated, 1000 g/mol, homopolymer diol), having an average hydroxy functionality of 2. Polyol C has a hydroxyl number of 106-114 mg KOH/g as measured using ASTM D4274-94d and a viscosity at 25 °C (as measured by Dow Chemical Company) of 140 mPa·s, as measured using ASTM D445-94. The viscosity of polyol C at 20 °C, as measured with the protocol as defined hereinbefore, showed Newtonian behaviour and was about 0.21 Pa·s.

**Example 1**

The following dispersions were made (see Table 2) with the ingredients described *supra.* The dispersions were produced by weighing 18 gram of plant-based solid particles (b) in a Duran bottle of 100 ml and by adding 72 gram of liquid (a) to prepare a 20 wt.% mixture of plant-based solid particles (b), based on the weight of the dispersion. Mixtures with other weight percentages of plant-based solid particles (b) were prepared in a similar way. The mixtures were stirred to prepare dispersions. For polyols A and B, a mixer was needed to prepare a dispersion. It was observed that preparing a dispersion was more difficult for smaller particles (BetaBind-A® Small fraction) than for larger particles (BetaBind-A® Large fraction). The samples with BetaBind-A® Large fraction are not according to the invention.

Table 2

| Dispersion | Liquid (a) | Solid particles (b) | Content Solid particles (b) [wt.%] |
|---|---|---|---|
| A-5wt.% Small | Polyol A | BetaBind-A® Small fraction | 5 |
| A-10wt.% Small | Polyol A | BetaBind-A® Small fraction | 10 |
| A-20wt.% Small | Polyol A | BetaBind-A® Small fraction | 20 |
| A-30wt.% Small | Polyol A | BetaBind-A® Small fraction | 30 |
| A-20wt.% Large | Polyol A | BetaBind-A® Large fraction | 20 |
| B-5wt.% Small | Polyol B | BetaBind-A® Small fraction | 5 |
| B-10wt.% Small | Polyol B | BetaBind-A® Small fraction | 10 |
| B-20wt.% Small | Polyol B | BetaBind-A® Small fraction | 20 |
| B-25wt.% Small | Polyol B | BetaBind-A® Small fraction | 25 |
| B-10wt.% Large | Polyol B | BetaBind-A® Large fraction | 10 |
| B-25wt.% Large | Polyol B | BetaBind-A® Large fraction | 25 |
| C-15wt.% Small | Polyol C | BetaBind-A® Small fraction | 15 |
| C-25wt.% Small | Polyol C | BetaBind-A® Small fraction | 25 |
| C-28wt.% Small | Polyol C | BetaBind-A® Small fraction | 28 |
| C-30wt.% Small | Polyol C | BetaBind-A® Small fraction | 30 |
| C-33wt.% Small | Polyol C | BetaBind-A® Small fraction | 33 |
| C-25wt.% Large | Polyol C | BetaBind-A® Large fraction | 25 |
| C-33wt.% Large | Polyol C | BetaBind-A® Large fraction | 33 |

Stability of the dispersions at room temperature (~20 °C) was measured as a function of time using the protocol as described hereinbefore. Results are graphically presented in Figure 1 (dispersions with Polyol A), Figure 2 (dispersions with Polyol B) and Figure 3 (dispersions with Polyol C).

The viscosity and hysteresis of the dispersions was measured at 20 °C using the protocol as described hereinbefore. Results are graphically presented in Figures 4-5 (dispersions with Polyol A), Figures 6-7 (dispersions with Polyol B) and Figures 8-9 (dispersions with Polyol C).

It can be concluded from Figures 5, 7 and 9 that dispersions with the same weight percentage of plant-based solid particles (b) and only differing in particle size show rather similar shear thinning and hysteresis profiles. However, it follows from Figures 1-3 that dispersions with the same weight percentage of plant-based solid particles (b) and only differing in particle size show different stability as regards sedimentation. The dispersions with BetaBind-A® Large fraction (not according to the invention) are far less stable than dispersions according to the invention comprising BetaBind-A® Small fraction.

It can further be concluded from Figures 1-3 that for Polyol A, B and C, the stability of the dispersions according to the invention improves with increasing weight percentage of BetaBind-A® Small fraction.

It follows from Figure 4 that dispersions comprising BetaBind-A® small fraction and Polyol A only start to show substantial shear thinning behaviour with increased viscosity at low shear rates when 20 wt.% or more of the BetaBind-A® Small fraction is used. The same observation holds true for dispersions comprising BetaBind-A® Small fraction and Polyol B (see Figure 6). Polyol A and B have similar viscosities. Polyol C has a much lower viscosity. It follows from Figure 8 that dispersions comprising BetaBind-A® Small fraction and Polyol C only start to show substantial shear thinning behaviour with increased viscosity at low shear rates when 30 wt.% or more of the BetaBind-A® Small fraction is used. It can be concluded from combined Figures 1-4, 6 and 8 that only the dispersions comprising BetaBind-A® Small fraction that show substantial shear thinning behaviour with increased viscosity at low shear rates exhibit sufficient stability as regards sedimentation. These sufficiently stable dispersions have in common that their viscosity at low shear rates (0.1 $s^{-1}$) is above 20 Pa s, as measured with a C-CC27/T200/SS 45971 measuring cup and a ST24-2D/2V/2V-30-SN26943 vane rotor.

Thixotropic behaviour was measured at 20 °C using the protocol as described hereinbefore for samples A-20wt.% Small, B-20wt.% Small, B-25wt.% Small and C-30wt.% Small. Results are graphically represented in Figure 10. As can be inferred from Figure 10, the dispersions all recover at least 50% of the viscosity measured in the first regime within a few seconds from the start of the third regime. Moreover, the dispersions are able to regain about 90% of the value of the viscosity of the first regime within 10 seconds. Consequently, the internal network is reformed sufficiently quick after a breakdown due to stirring to stabilize the dispersion again as regards sedimentation of the plant-based solid particles (b).

**Comparative Example**

It was tried to make a dispersion of 20 wt.% of the milled dry wood chips as defined hereinbefore in Polyol A. No dispersions were, however, obtained, not even with intense stirring. Without wishing to be bound by any theory, it is hypothesized that Polyol A does not substantially wet the rather apolar lignin-rich dry wood chips.

**Example 3**

Two polyurethane foams were produced using dispersions according to the invention (20 wt.% and 30 wt.% BetaBind-A® small fraction, based on the weight of the dispersion, in Polyol A). The 'further ingredients' in the dispersion were DMCHA as catalyst (N,N-dimethylcyclohexylamine), K-octoate (AKDRY K Octoate %15, Akpa), traces of water and surfactant Tegostab® B 8491 (Evonik). The total amount of further ingredients in the dispersion was about 4 wt.%, based on the total weight of the dispersion. To 126 parts of the dispersion, 16.5 parts of cyclopentane as a blowing agent and 194 parts of polymeric 4,4-diphenylmethane diisocyanate (pMDI, Voranate™ M 647, Dow) were added . The ingredients were hand mixed and allowed to react. The tack free time was between 60 and 75 seconds.

A comparative polyurethane foam was produced that was similar to the polyurethane foams produced using a dispersion according to the invention. The only difference was that the 20 wt.% BetaBind-A® small fraction, based on the weight of the dispersion, was replaced with 20 wt.% of the flame retardant tris(2-chloroisopropyl)phosphate (TCPP, obtained from Supelco), based on the weight of the dispersion. TCPP is a toxic flame retardant commonly used in polyurethane foam in consumer products, in home insulation, and in electronics. It is used as an additive to polyurethane foam, it is not chemically bound and it escapes from products into the indoor environment. The tack free time was about 75 seconds.

The two polyurethane foams produced using dispersions according to the invention and the comparative polyurethane foam were subjected to B2 flame retardancy tests according to DIN 4102. It was concluded that both the polyurethane foams produced using dispersions according to the invention and the comparative polyurethane foam met the B2 flame retardancy rating of DIN 4102. Accordingly, the B2 flame retardancy rating of DIN 4102 can be realized by replacing the toxic flame retardant TCPP in polyurethane foams with the plant-based solid particles as defined herein.

## Claims

1. Dispersion of a liquid continuous phase and solids dispersed therein, said dispersion consisting of:

    (a) 50 - 95 wt.% of a liquid, based on the weight of the dispersion;
    (b) 5 - 40 wt.% of plant-based solid particles, based on the weight of the dispersion;
    and
    (c) 0 - 20 wt.% of one or more further ingredients other than (a) and (b), based on the total weight of the dispersion,
    wherein the plant-based solid particles (b) comprise, based on dry matter of the solid particles (b), at least 70 wt.% of parenchymal cell wall material and less than 6 wt.% of lignin,
    wherein the plant-based solid particles (b) comprise, based on the weight of the solid particles (b), less than 7 wt.% of water,
    wherein the plant-based solid particles (b) have a particle size distribution **characterized by** a D90 of 300 μm or smaller, as measured in accordance with dry powder laser diffraction, and
    wherein the liquid (a) consists of one or more polyol compounds.

2. Dispersion according to claim 1, wherein the viscosity of the dispersion at 20 °C and at a shear rate of 0.1 $s^{-1}$ is at least 20 Pa·s, as measured using a C-CC27/T200/SS 45971 measuring cup and a ST24-2D/2V/2V-30-SN26943 vane rotor.

3. Dispersion according to claim 1 or 2, wherein the one or more further ingredients other than (a) and (b) comprise a dispersant.

4. Dispersion according to any one of claims 1 to 3, said dispersion consisting of:

(a) 50 - 80 wt.% of a liquid, based on the weight of the dispersion;
(b) 20 - 40 wt.% of plant-based solid particles, based on the weight of the dispersion;
and
(c) 0 - 10 wt.% of one or more further ingredients other than (a) and (b), based on the total weight of the dispersion,
wherein the plant-based solid particles (b) comprise, based on dry matter of the solid particles (b), at least 70 wt.% of parenchymal cell wall material and less than 6 wt.% of lignin,
wherein the plant-based solid particles (b) comprise, based on the weight of the solid particles (b), less than 7 wt.% of water,
wherein the plant-based solid particles (b) have a particle size distribution **characterized by** a D90 of 300 μm or smaller, as measured in accordance with dry powder laser diffraction,
wherein the liquid (a) consists of one or more polyol compounds, and
wherein the viscosity of the dispersion at 20 °C and at a shear rate of 0.1 $s^{-1}$ is at least 20 Pa·s, as measured using a C-CC27/T200/SS 45971 measuring cup and a ST24-2D/2V/2V-30-SN26943 vane rotor.

**5.** Dispersion according to any one of claims 1 to 4, wherein the one or more polyol compounds constituting liquid (a) have an hydroxyl number from 50 mg KOH/g to 550 mg KOH/g, preferably 100 to 550 mg KOH/g, as measured in accordance with ASTM D4274 - 16.

**6.** Dispersion according to any one of claims 1 to 5, wherein the liquid (a) consisting of the one or more polyol compounds has a viscosity of between 0.1 and 15 Pa·s, preferably between 0.2 and 10 Pa·s, at 20 °C and at a shear rate of 0.1 $s^{-1}$, as measured using a C-CC27/T200/SS 45971 measuring cup and a ST24-2D/2V/2V-30-SN26943 vane rotor.

**7.** Dispersion according to any one of claims 1 to 6, wherein the one or more polyol compounds constituting liquid (a) are chosen from the group consisting of pentaerythritol, trimethylolpropane, glycols, (hydroxy alkylated) sugar alcohols, glycerine, (modified) polyether polyols, (modified) aliphatic and aromatic polyester polyols, polycarbonate polyols and polyols derived from plant-based natural oils.

**8.** Dispersion according to any one of claims 1 to 7, having a viscosity at 20 °C and at a shear rate of 0.1 $s^{-1}$ of at least 25 Pa·s, at least 30 Pa·s, at least 40 Pa·s, at least 50 Pa s, at least 75 Pa s, or at least 100 Pa s, as measured using a C-CC27/T200/SS 45971 measuring cup and a ST24-2D/2V/2V-30-SN26943 vane rotor.

**9.** Dispersion according to any one of claims 1 to 8, wherein the plant-based solid particles (b) have a particle size distribution **characterized by** a D90 of 300 μm or smaller, a D50 of 150 μm or smaller and a D10 of 50 μm or smaller, preferably a particle size distribution **characterized by** a D90 of between 155 and 300 μm, a D50 of between 55 and 150 μm and a D10 of between 5 and 50 μm, more preferably a particle size distribution **characterized by** a D90 of 265 μm or smaller, a D50 of 110 μm or smaller and a D10 of 25 μm or smaller, as measured with dry powder laser diffraction.

**10.** Dispersion according to any one of claims 1 to 9, wherein the one more further ingredients (c) are selected from the group consisting of dyes, pigments, dispersants, surfactants, catalysts, porogenic agents, fillers, water-binding agents, water, anti-foaming agents, flame retardants, UV stabilizers, antioxidants, adhesion promoters, plasticizers, thickeners and rheology modifiers.

**11.** Dispersion according to any one of claims 1 to 10, wherein the amount of the one or more further ingredients (c) is 0 - 9 wt.%, 0 - 8 wt.%, 0 - 7 wt.%, 0 - 6 wt.%, 0 - 5 wt.%, 0 - 4.5 wt.%, 0 - 4 wt.%, 0 - 3.5 wt.% or 0 - 3 wt.%, based on the total weight of dispersion.

**12.** Dispersion according to any one of claims 1 to 11, wherein the plant-based solid particles (b) are obtained by or obtainable by a process consisting of:

(A) drying wet spent sugar beet pulp, wet pulp from citrus fruits, wet pulp from tomatoes, wet spent pulp from chicory, wet pulp from potatoes, wet pulp from pineapple, wet pulp from apple, wet pulp from cranberries, wet pulp from grapes, and/or wet pulp from carrots (exclusive of the stems and leaves), more preferably obtained from wet spent sugar beet pulp and/or wet spent chicory pulp, even more preferably obtained from wet spent sugar beet pulp, during which the temperature of the pulp preferably does not exceed 95 °C;
(B) milling or comminuting the dried pulp obtained in step (A); and
(C) optionally subjecting the milled or comminuted dried pulp obtained in step (B) to sieving.

13. Dispersion according to any one of claims 1 to 12, wherein the plant-based solid particles (b) comprise, based on dry matter of the solid particles (b), 15-35 wt.%, preferably 15-30 wt.%, more preferably 18-26 wt.% cellulose, 15-40 wt.%, preferably 20-38 wt.%, more preferably 22-35 wt.% hemicellulose, 15-35 wt.%, preferably 20-30 wt.%, more preferably 21-27 wt.% pectin, 5-15 wt.% protein, less than 5 wt.% lignin, less than 5 wt.% sugars and less than 1 wt.% fat

14. Use of the dispersion as defined in any one of claims 1 to 13 as a feedstock in a process for the production of a polymer, preferably a polymer chosen from the group consisting of polyurethanes, polyisocyanurates, polyesters, polyethers, polycarbonates and polyamides.

15. Use of the dispersion as defined in any one of claims 1 to 13 as a flame retardant in a polymer, preferably a polymer chosen from the group consisting of polyurethanes, polyisocyanurates, polyesters, polyethers, polycarbonates and polyamides.

## Patentansprüche

1. Dispersion aus einer flüssigen kontinuierlichen Phase und darin dispergierten Feststoffen, wobei die Dispersion besteht aus:

   (a) 50 - 95 Gew.-% einer Flüssigkeit, bezogen auf das Gewicht der Dispersion;
   (b) 5 - 40 Gew.-% Feststoffpartikeln auf pflanzlicher Basis, bezogen auf das Gewicht der Dispersion; und
   (c) 0-20 Gew.-% eines oder mehrerer weiterer Inhaltsstoffe außer (a) und (b), bezogen auf das Gesamtgewicht der Dispersion,
   wobei die Feststoffpartikel auf pflanzlicher Basis (b), bezogen auf die Trockensubstanz der Feststoffpartikel (b), mindestens 70 Gew.-% parenchymales Zellwandmaterial und weniger als 6 Gew.-% an Lignin umfassen, wobei die Feststoffpartikel auf pflanzlicher Basis (b), bezogen auf das Gewicht der Feststoffpartikel (b), weniger als 7 Gew.-% Wasser umfassen,
   wobei die Feststoffpartikel auf pflanzlicher Basis (b) eine Partikelgrößenverteilung aufweisen, die **gekennzeichnet ist durch** einen D90 von 300 μm oder weniger, gemessen nach der Trockenpulver-Laserbeugung, und wobei die Flüssigkeit (a) aus einer oder mehreren Polyolverbindung(en) besteht.

2. Dispersion nach Anspruch 1, wobei die Viskosität der Dispersion bei 20 °C und bei einer Scherrate von 0.1 $s^{-1}$ mindestens 20 Pa s beträgt, gemessen unter Verwendung eines C-CC27/T200/SS 45971-Messbechers und eines ST24-2D/2V/2V-30-SN26943-Flügelrotors.

3. Dispersion nach Anspruch 1 oder 2, wobei der eine oder die mehreren weiteren Inhaltsstoffe außer (a) und (b) ein Dispergiermittel umfassen.

4. Dispersion nach einem der Ansprüche 1 bis 3, wobei die Dispersion besteht aus:

   (a) 50 - 80 Gew.-% einer Flüssigkeit, bezogen auf das Gewicht der Dispersion;
   (b) 20 - 40 Gew.-% Feststoffpartikeln auf pflanzlicher Basis, bezogen auf das Gewicht der Dispersion; und
   (c) 0-10 Gew.-% eines oder mehrerer weiterer Inhaltsstoffe außer (a) und (b), bezogen auf das Gesamtgewicht der Dispersion,
   wobei die Feststoffpartikel auf pflanzlicher Basis (b), bezogen auf die Trockensubstanz der Feststoffpartikel (b), mindestens 70 Gew.-% parenchymales Zellwandmaterial und weniger als 6 Gew.-% an Lignin umfassen, wobei die Feststoffpartikel auf pflanzlicher Basis (b), bezogen auf das Gewicht der Feststoffpartikel (b), weniger als 7 Gew.-% Wasser umfassen,
   wobei die Feststoffpartikel auf pflanzlicher Basis (b) eine Partikelgrößenverteilung aufweisen, die **gekennzeichnet ist durch** einen D90 von 300 μm oder weniger, gemessen nach der Trockenpulver-Laserbeugung, wobei die Flüssigkeit (a) aus einer oder mehreren Polyolverbindung(en) besteht, und wobei die Viskosität der Dispersion bei 20 °C und bei einer Scherrate von 0.1 $s^{-1}$ mindestens 20 Pa s beträgt, gemessen unter Verwendung eines C-CC27/T200/SS 45971 Messbechers und eines ST24-2D/2V/2V-30-SN26943-Flügelrotors.

5. Dispersion nach einem der Ansprüche 1 bis 4, wobei die eine oder mehreren Polyolverbindung(en), die die Flüssigkeit (a) bildet/bilden, eine Hydroxylzahl von 50 mg KOH/g bis 550 mg KOH/g, vorzugsweise 100 bis 550 mg KOH/g, gemessen nach ASTM D4274-16, aufweisen.

6. Dispersion nach einem der Ansprüche 1 bis 5, wobei die Flüssigkeit (a), die aus der einen oder den mehreren Polyolverbindung(en) besteht, eine Viskosität zwischen 0.1 und 15 Pa s, vorzugsweise zwischen 0.2 und 10 Pa s, bei 20 °C und bei einer Scherrate von 0.1 $s^{-1}$ aufweist, gemessen unter Verwendung eines C-CC27/T200/SS 45971 Messbechers und eines ST24-2D/2V/2V-30-SN26943-Flügelrotors.

7. Dispersion nach einem der Ansprüche 1 bis 6, wobei die eine oder mehreren Polyolverbindung(en), die die Flüssigkeit (a) bilden, aus der Gruppe ausgewählt sind, die aus Pentaerythritol, Trimethylolpropan, Glykolen, (hydroxyalkylierten) Zuckeralkoholen, Glycerin, (modifizierten) Polyetherpolyolen, (modifizierten) aliphatischen und aromatischen Polyesterpolyolen, Polycarbonatpolyolen und von natürlichen Ölen auf pflanzlicher Basis abgeleiteten Polyolen besteht.

8. Dispersion nach einem der Ansprüche 1 bis 7 mit einer Viskosität bei 20 °C und bei einer Scherrate von 0.1 $s^{-1}$ von mindestens 25 Pa s, mindestens 30 Pa s, mindestens 40 Pa s, mindestens 50 Pa s, mindestens 75 Pa s oder mindestens 100 Pa s, gemessen unter Verwendung eines C-CC27/T200/SS 45971 Messbechers und eines ST24-2D/2V/2V-30-SN26943-Flügelrotors.

9. Dispersion nach einem der Ansprüche 1 bis 8, wobei die Feststoffpartikel auf pflanzlicher Basis (b) eine Partikelgrößenverteilung aufweisen, die durch einen D90 von 300 μm oder weniger, einen D50 von 150 μm oder weniger und einen D10 von 50 μm oder weniger gekennzeichnet ist, vorzugsweise eine Partikelgrößenverteilung, die durch einen D90 von zwischen 155 und 300 μm, einen D50 von zwischen 55 und 150 μm und einen D10 von zwischen 5 und 50 μm gekennzeichnet ist, noch bevorzugter eine Partikelgrößenverteilung, die durch einen D90 von 265 μm oder weniger, einen D50 von 110 μm oder weniger und einen D10 von 25 μm oder weniger gekennzeichnet ist, gemessen mit der Trockenpulver-Laserbeugung.

10. Dispersion nach einem der Ansprüche 1 bis 9, wobei der eine oder die mehreren weitere(n) Inhaltsstoff(e) (c) ausgewählt sind aus der Gruppe bestehend aus Farbstoffen, Pigmenten, Dispergiermitteln, Tensiden, Katalysatoren, porogenen Mitteln, Füllstoffen, Wasserbindemitteln, Wasser, Antischaummitteln, Flammschutzmitteln, UV-Stabilisatoren, Antioxidantien, Haftvermittlern, Weichmachern, Verdickern und Rheologiemodifikatoren.

11. Dispersion nach einem der Ansprüche 1 bis 10, wobei die Menge des einen oder der mehreren weiteren Inhaltsstoffe (c) 0 - 9 Gew.-%, 0 - 8 Gew.-%, 0 - 7 Gew.-%, 0 - 6 Gew.-%, 0 - 5 Gew.-%, 0 - 4.5 Gew.-%, 0 - 4 Gew.-%, 0 - 3.5 Gew.-% oder 0 - 3 Gew.-%, bezogen auf das Gesamtgewicht der Dispersion, beträgt.

12. Dispersion nach einem der Ansprüche 1 bis 11, wobei die Feststoffpartikel auf pflanzlicher Basis (b) durch ein Verfahren erhalten werden oder erhältlich sind, das besteht aus:

    (A) Trocknen von nassen ausgedienten Zuckerrübenschnitzeln, nassen Schnitzeln aus Zitrusfrüchten, nassen Schnitzeln aus Tomaten, nassen ausgedienten Schnitzeln aus Chicorée, nassen Schnitzeln aus Kartoffeln, nassen Schnitzeln aus Ananas, nassen Schnitzeln aus Äpfeln, nassen Schnitzeln aus Cranberries, nassen Schnitzeln aus Weintrauben und/oder nassen Schnitzeln aus Karotten (ohne die Stiele und Blätter), die vorzugsweise aus nassen ausgedienten Zuckerrübenschnitzeln und/oder nassen ausgedienten Chicoréeschnitzeln erhalten wurden und noch vorteilhafter aus nassen ausgedienten Zuckerrübenschnitzeln gewonnen wurden, währenddessen die Temperatur der Schnitzel vorzugsweise 95 °C nicht überschreitet;
    (B) Mahlen oder Zerkleinern der in Schritt (A) erhaltenen getrockneten Schnitzel; und
    (C) optionales Unterziehen der in Schritt (B) erhaltenen gemahlenen oder zerkleinerten getrockneten Schnitzel einer Siebung.

13. Dispersion nach einem der Ansprüche 1 bis 12, wobei die Feststoffpartikel auf pflanzlicher Basis (b), bezogen auf die Trockensubstanz der Feststoffpartikel (b), 15-35 Gew.-%, vorzugsweise 15-30 Gew.-%, bevorzugter 18-26 Gew.-% Cellulose, 15-40 Gew. %, vorzugsweise 20-38 Gew.-%, bevorzugter 22-35 Gew.-% Hemicellulose, 15-35 Gew.-%, vorzugsweise 20-30 Gew.-%, bevorzugter 21-27 Gew.-% Pektin, 5-15 Gew.-% Protein, weniger als 5 Gew.-% Lignin, weniger als 5 Gew.-% Zucker und weniger als 1 Gew.-% Fett umfassen.

14. Verwendung der in einem der Ansprüche 1 bis 13 definierten Dispersion als Ausgangsmaterial in einem Verfahren zur Herstellung eines Polymers, vorzugsweise eines Polymers, ausgewählt aus der Gruppe bestehend aus Polyurethanen, Polyisocyanuraten, Polyestern, Polyethern, Polycarbonaten und Polyamiden.

15. Verwendung der in einem der Ansprüche 1 bis 13 definierten Dispersion als Flammschutzmittel in einem Polymer, vorzugsweise einem Polymer, ausgewählt aus der Gruppe bestehend aus Polyurethanen, Polyisocyanuraten, Polyestern, Polyethern, Polycarbonaten und Polyamiden.

## Revendications

**1.** Dispersion d'une phase continue liquide et de solides qui y sont dispersés, ladite dispersion consistant en :

(a) 50 à 95 % en poids d'un liquide, sur la base du poids de la dispersion;
(b) 5 à 40 % en poids de particules solides à base de plantes, sur la base du poids de la dispersion ; et
(c) 0 à 20 % en poids d'un ou plusieurs autres ingrédients autre que (a) et (b), sur la base du poids total de la dispersion,
où les particules solides à base de plantes (b) comprennent, sur la base de matière sèche des particules solides (b), au moins 70 % en poids de matériau de paroi cellulaire parenchymateuse et moins de 6 % en poids de lignine,
où les particules solides à base de plantes (b) comprennent, sur la base du poids des particules solides (b), moins de 7 % en poids d'eau,
où les particules solides à base de plantes (b) ont une distribution par taille de particules **caractérisée par** un D90 de 300 μm ou inférieure, comme mesurées selon la diffraction laser de poudre sèche, et
où le liquide (a) consiste en un ou plusieurs composés de polyol.

**2.** Dispersion selon la revendication 1, où la viscosité de la dispersion à 20 °C et à un taux de cisaillement de 0.1 $s^{-1}$ est d'au moins 20 Pa·s, comme mesuré en utilisant un gobelet doseur C-CC27/T200/SS 45971 et un rotor à palettes ST24-2D/2V/2V-30-SN26943.

**3.** Dispersion selon la revendication 1 ou 2, où l'un ou plusieurs autres ingrédients autre que (a) et (b) comprennent un agent dispersant.

**4.** Dispersion selon l'une quelconque des revendications 1 à 3, ladite dispersion consistant en :

(a) 50 à 80 % en poids d'un liquide, sur la base du poids de la dispersion;
(b) 20 à 40 % en poids de particules solides à base de plantes, sur la base du poids de la dispersion ; et
(c) 0 à 10 % en poids d'un ou plusieurs autres ingrédients autre que (a) et (b), sur la base du poids total de la dispersion,
où les particules solides à base de plantes (b) comprennent, sur la base de matière sèche des particules solides (b), au moins 70 % en poids de matériau de paroi cellulaire parenchymateuse et moins de 6 % en poids de lignine,
où les particules solides à base de plantes (b) comprennent, sur la base du poids des particules solides (b), moins de 7 % en poids d'eau,
où les particules solides à base de plantes (b) ont une distribution par taille de particules **caractérisée par** un D90 de 300 μm ou inférieure, comme mesurées selon la diffraction laser de poudre sèche,
où le liquide (a) consiste en un ou plusieurs composés de polyol, et
où la viscosité de la dispersion à 20 °C et à un taux de cisaillement de 0.1 $s^{-1}$ est d'au moins 20 Pa·s, comme mesuré en utilisant un gobelet doseur C-CC27/T200/SS 45971 et un rotor à palettes ST24-2D/2V/2V-30-SN26943.

**5.** Dispersion selon l'une quelconque des revendications 1 à 4, où l'un ou plusieurs composés de polyol constituant un liquide (a) ont un nombre d'hydroxyle de 50 mg KOH/g à 550 mg KOH/g, de préférence de 100 à 550 mg KOH/g, comme mesuré selon ASTM D4274 - 16.

**6.** Dispersion selon l'une quelconque des revendications 1 à 5, où le liquide (a) consistant en l'un ou plusieurs composés de polyol a une viscosité entre 0.1 et 15 Pa·s, de préférence entre 0.2 et 10 Pa·s, à 20 °C et à un taux de cisaillement de 0.1 $s^{-1}$, comme mesuré en utilisant un gobelet doseur C-CC27/T200/SS 45971 et un rotor à palettes ST24-2D/2V/2V-30-SN26943.

**7.** Dispersion selon l'une quelconque des revendications 1 à 6, où l'un ou plusieurs composés de polyol constituant un liquide (a) sont choisis dans le groupe consistant en pentaérythritol, triméthylolpropane, glycols, alcools de sucre (hydroxyalkylés), glycérine, polyols de polyéther (modifiés), polyols de polyester aliphatiques et aromatiques (modifiés), polyols de polycarbonate et polyols dérivés d'huiles naturelles à base de plantes.

**8.** Dispersion selon l'une quelconque des revendications 1 à 7, ayant une viscosité à 20 °C et à un taux de cisaillement de 0.1 $s^{-1}$ d'au moins 25 Pa·s, d'au moins 30 Pa·s, d'au moins 40 Pa·s, d'au moins 50 Pa·s, d'au moins 75 Pa·s, ou d'au moins 100 Pa·s, comme mesuré en utilisant un gobelet doseur C-CC27/T200/SS 45971 et un rotor à palettes ST24-2D/2V/2V-30-SN26943.

**9.** Dispersion selon l'une quelconque des revendications 1 à 8, où les particules solides à base de plantes (b) ont une distribution par taille de particules **caractérisée par** un D90 de 300 μm ou inférieure, un D50 de 150 μm ou inférieure et un D10 de 50 μm ou inférieure, de préférence une distribution par taille de particules **caractérisée par** un D90 entre 155 et 300 μm, un D50 entre 55 et 150 μm et un D10 entre 5 et 50 μm, plus préférablement une distribution par taille de particules **caractérisée par** un D90 de 265 μm ou inférieure, un D50 de 110 μm ou inférieure et un D10 de 25 μm ou inférieure, comme mesurée par diffraction de laser de poudre sèche.

**10.** Dispersion selon l'une quelconque des revendications 1 à 9, où l'un ou plusieurs autres ingrédients (c) sont sélectionnés à partir du groupe consistant en colorants, pigments, agents dispersants, agents de surface, catalyseurs, agents porogèniques, matériaux de remplissage, agents fixant l'eau, eau, agents anti-mousse, retardateurs de flamme, stabilisateurs UV, antioxydants, promoteurs d'adhésion, plastifiants, épaississants et modificateurs de rhéologie.

**11.** Dispersion selon l'une quelconque des revendications 1 à 10, où la quantité de l'un ou plusieurs autres ingrédients (c) est de 0 à 9 % en poids, de 0 à 8 % en poids, de 0 à 7 % en poids, de 0 à 6 % en poids, de 0 à 5 % en poids, de 0 à 4,5 % en poids, de 0 à 4 % en poids, de 0 à 3.5 % en poids ou de 0 à 3 % en poids, sur la base du poids total de dispersion.

**12.** Dispersion selon l'une quelconque des revendications 1 à 11, où les particules solides à base de plantes (b) sont obtenues par ou peuvent être obtenues par un procédé consistant en :

(A) sécher une pulpe de betterave sucrière résiduaire humide, une pulpe humide d'agrumes, une pulpe humide de tomates, pulpe résiduaire humide de chicorée, pulpe humide de pommes de terre, pulpe humide d'ananas, pulpe humide de pomme, pulpe humide de canneberges, pulpe humide de raisin, et/ou pulpe humide de carottes (à l'exclusion des tiges et des feuilles), plus préférablement obtenues de pulpe de betterave sucrière résiduaire humide et/ou pulpe de chicorée résiduaire humide, encore plus préférablement obtenues de pulpe de betterave sucrière résiduaire humide, pendant laquelle la température de la pulpe n'excède pas de préférence 95 °C ;
(B) broyer ou pulvériser la pulpe séchée obtenue à l'étape (A) ; et
(C) soumettre facultativement la pulpe séchée broyée ou pulvérisée obtenue à l'étape (B) à un tamisage.

**13.** Dispersion selon l'une quelconque des revendications 1 à 12, où les particules solides à base de plantes (b) comprennent, sur la base de matière sèche des particules solides (b), de 15 à 35 % en poids, de préférence de 15 à 30 % en poids, plus préférablement de 18 à 26 % en poids de cellulose, de 15 à 40 % en poids, de préférence de 20 à 38 % en poids, plus préférablement de 22 à 35 % en poids d'hémicellulose, de 15 à 35 % en poids, de préférence de 20 à 30 % en poids, plus préférablement de 21 à 27 % en poids de pectine, de 5 à 15 % en poids de protéine, moins de 5 % en poids de lignine, moins de 5 % en poids de sucres et moins de 1 % en poids de matières grasses.

**14.** Utilisation de la dispersion comme définie selon l'une quelconque des revendications 1 à 13 comme une matière première dans un procédé pour la production d'un polymère, de préférence un polymère choisi dans le groupe consistant en polyuréthanes, polyisocyanurates, polyesters, polyéthers, polycarbonates et polyamides.

**15.** Utilisation de la dispersion comme définie selon l'une quelconque des revendications 1 à 13 comme un ignifugeant dans un polymère, de préférence un polymère choisi dans le groupe consistant en polyuréthanes, polyisocyanurates, polyesters, polyéthers, polycarbonates et polyamides.

*Fig. 1*

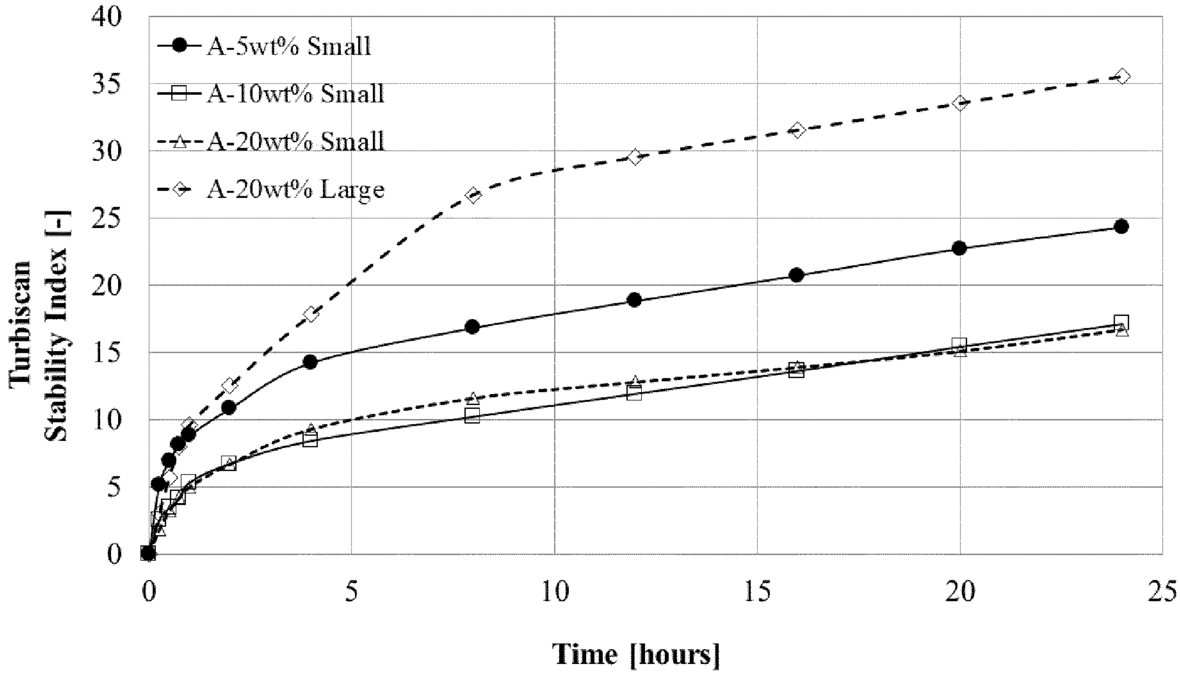
A-5wt% Small
A-10wt% Small
A-20wt% Small
A-20wt% Large
Turbiscan Stability Index [-]
Time [hours]
0
5
10
15
20
25
30
35
40

*Fig. 2*

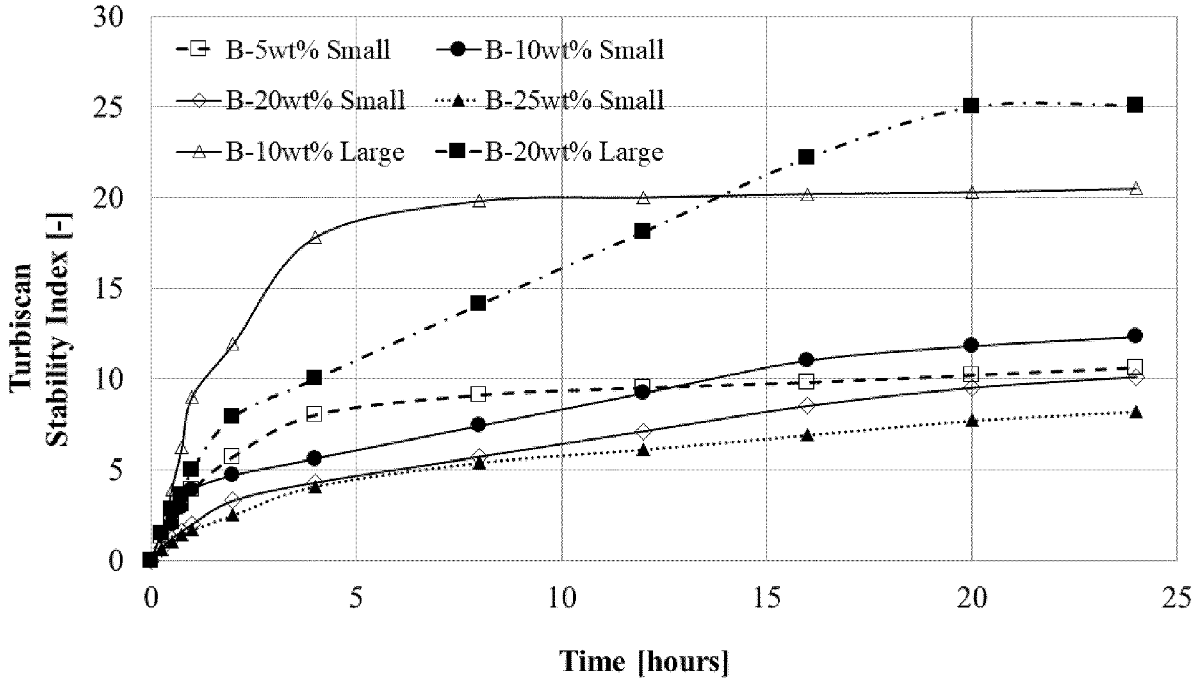
B-5wt% Small
B-10wt% Small
B-20wt% Small
B-25wt% Small
B-10wt% Large
B-20wt% Large
Turbiscan Stability Index [-]
Time [hours]
0
5
10
15
20
25
30

*Fig. 3*

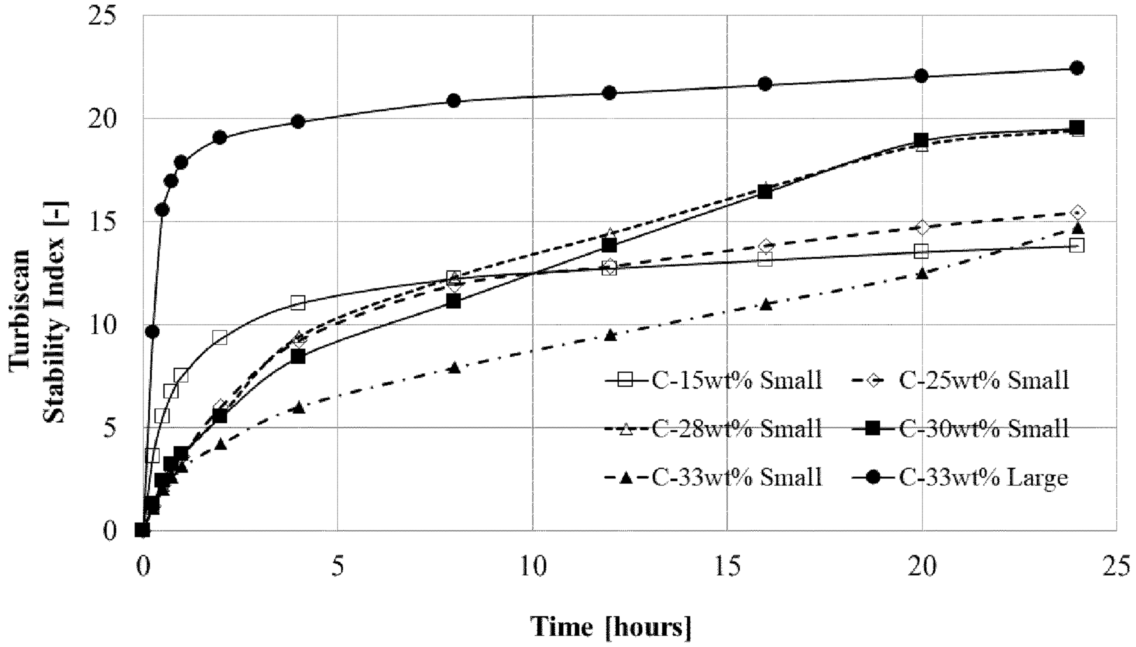
25
20
15
10
5
0
0
5
10
15
20
25
Turbiscan Stability Index [-]
Time [hours]
C-15wt% Small
C-25wt% Small
C-28wt% Small
C-30wt% Small
C-33wt% Small
C-33wt% Large

*Fig. 4*

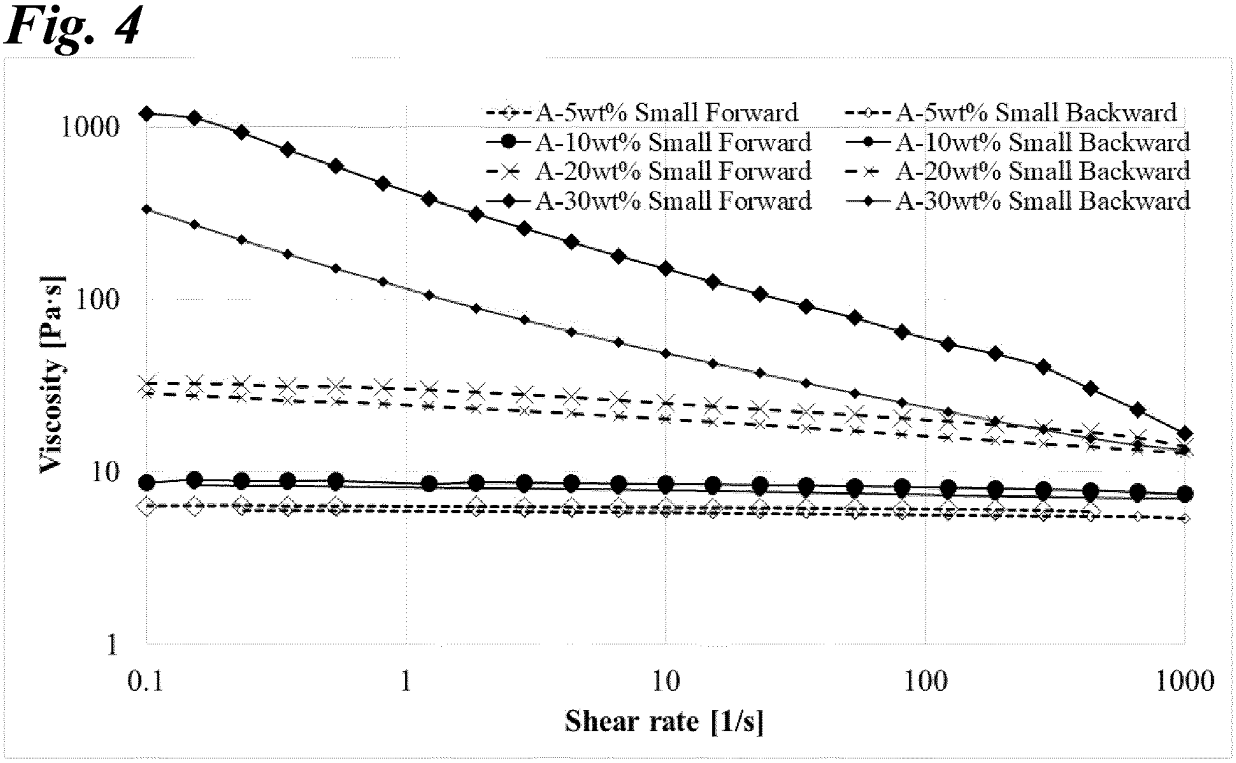
1000
100
10
1
0.1
1
10
100
1000
Viscosity [Pa·s]
Shear rate [1/s]
A-5wt% Small Forward
A-5wt% Small Backward
A-10wt% Small Forward
A-10wt% Small Backward
A-20wt% Small Forward
A-20wt% Small Backward
A-30wt% Small Forward
A-30wt% Small Backward

*Fig. 5*

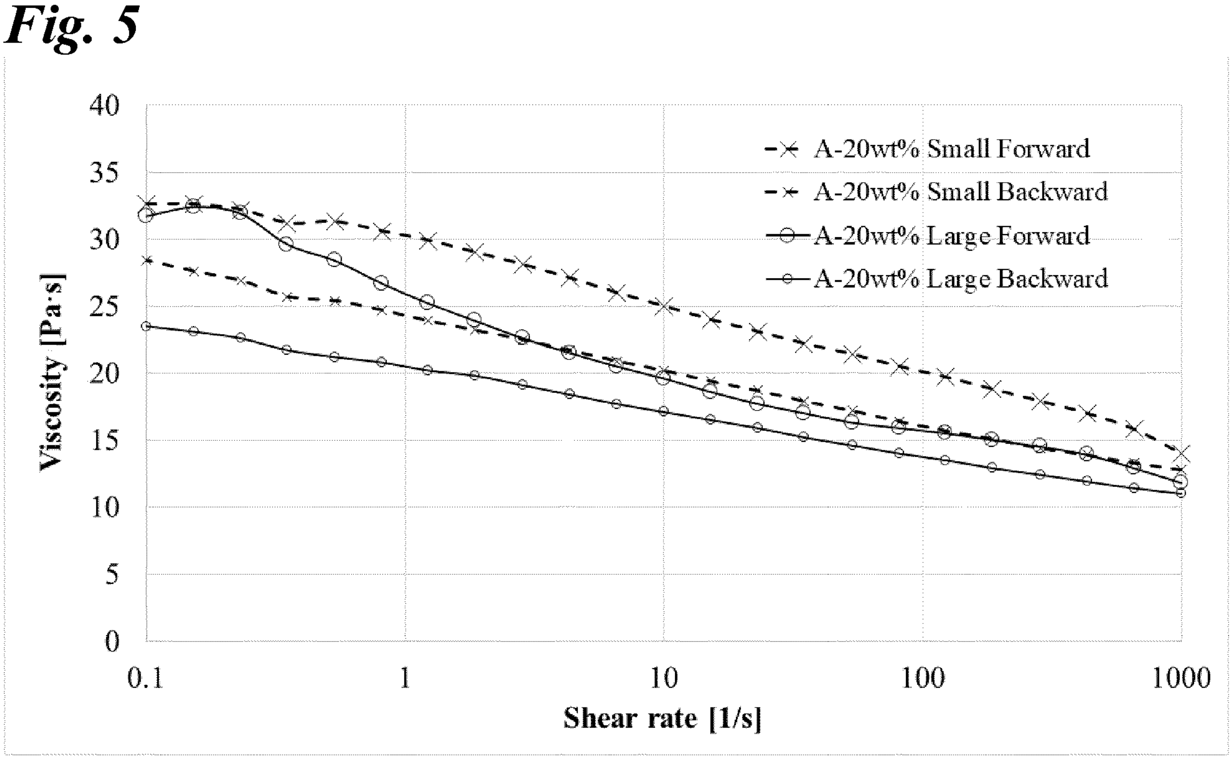
40
35
30
25
20
15
10
5
0
Viscosity [Pa·s]
0.1
1
10
100
1000
Shear rate [1/s]
A-20wt% Small Forward
A-20wt% Small Backward
A-20wt% Large Forward
A-20wt% Large Backward

*Fig. 6*

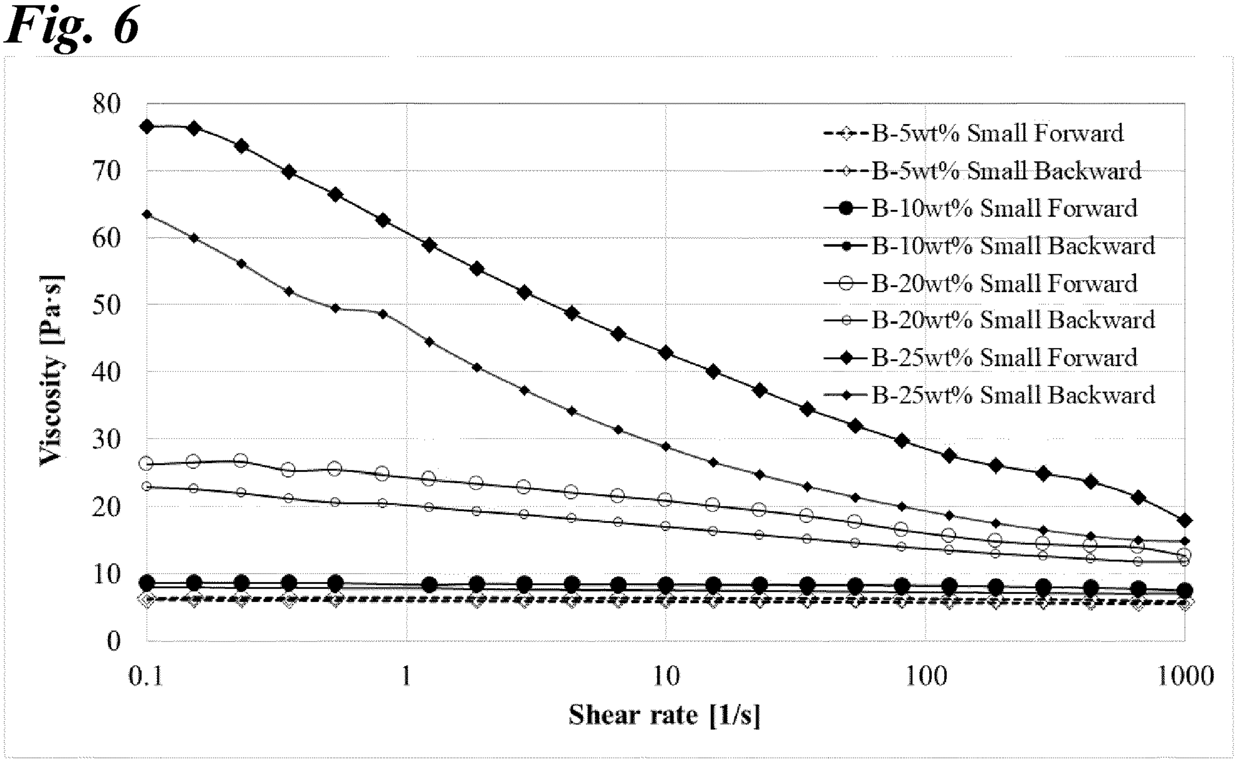
80
70
60
50
40
30
20
10
0
Viscosity [Pa·s]
0.1
1
10
100
1000
Shear rate [1/s]
B-5wt% Small Forward
B-5wt% Small Backward
B-10wt% Small Forward
B-10wt% Small Backward
B-20wt% Small Forward
B-20wt% Small Backward
B-25wt% Small Forward
B-25wt% Small Backward

*Fig. 7*

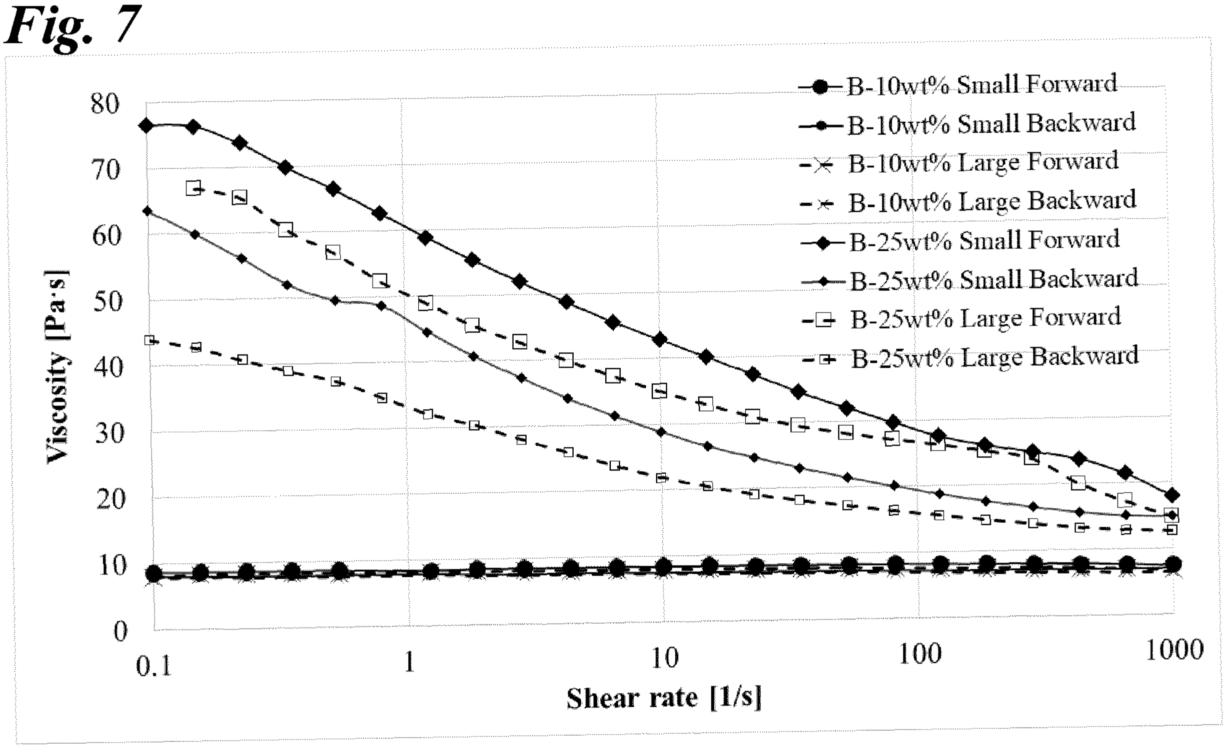
Viscosity [Pa·s]
Shear rate [1/s]
0
10
20
30
40
50
60
70
80
0.1
1
10
100
1000
B-10wt% Small Forward
B-10wt% Small Backward
B-10wt% Large Forward
B-10wt% Large Backward
B-25wt% Small Forward
B-25wt% Small Backward
B-25wt% Large Forward
B-25wt% Large Backward

*Fig. 8*

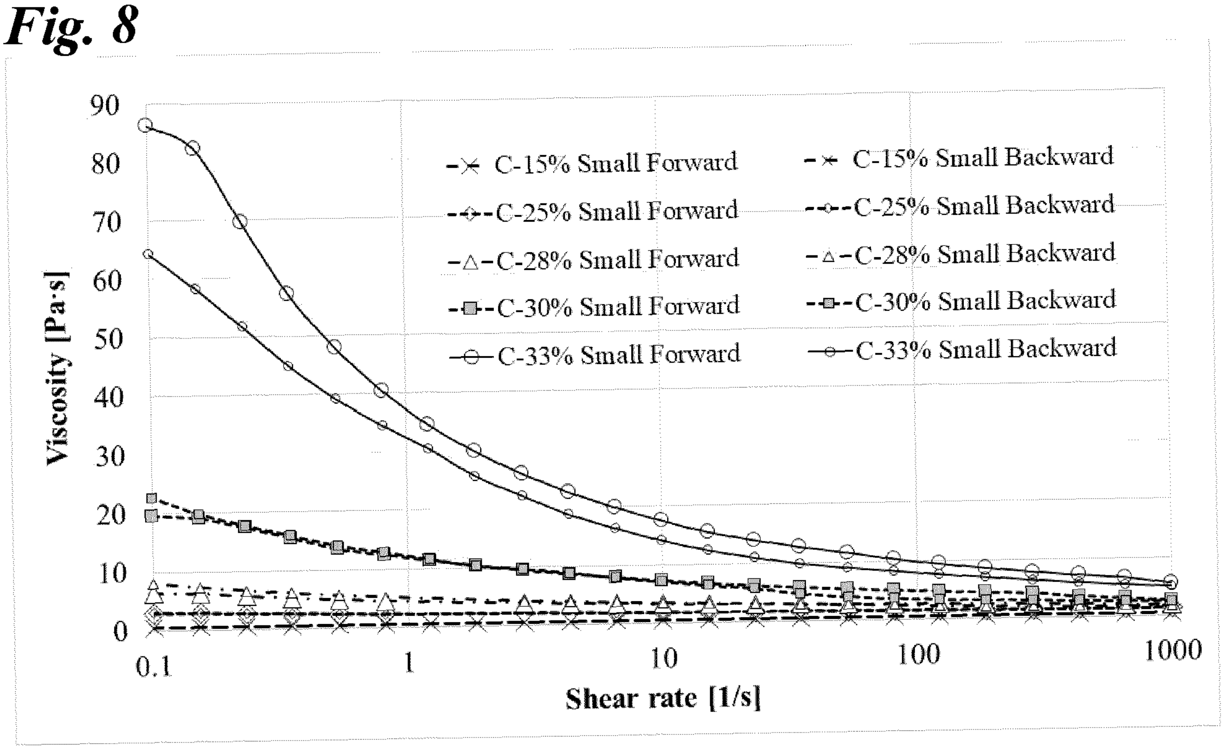
Viscosity [Pa·s]
Shear rate [1/s]
0
10
20
30
40
50
60
70
80
90
0.1
1
10
100
1000
C-15% Small Forward
C-15% Small Backward
C-25% Small Forward
C-25% Small Backward
C-28% Small Forward
C-28% Small Backward
C-30% Small Forward
C-30% Small Backward
C-33% Small Forward
C-33% Small Backward

*Fig. 9*

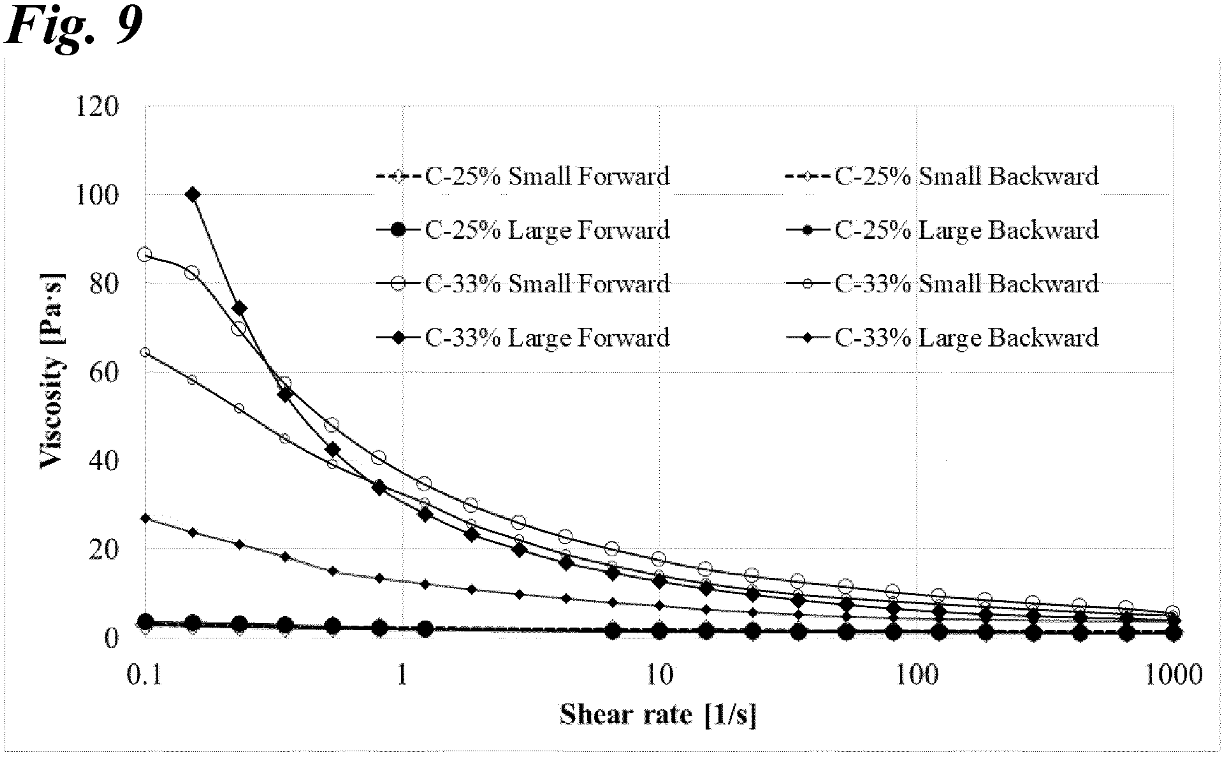
120
100
80
60
40
20
0
Viscosity [Pa·s]
0.1
1
10
100
1000
Shear rate [1/s]
C-25% Small Forward
C-25% Small Backward
C-25% Large Forward
C-25% Large Backward
C-33% Small Forward
C-33% Small Backward
C-33% Large Forward
C-33% Large Backward

*Fig. 10*

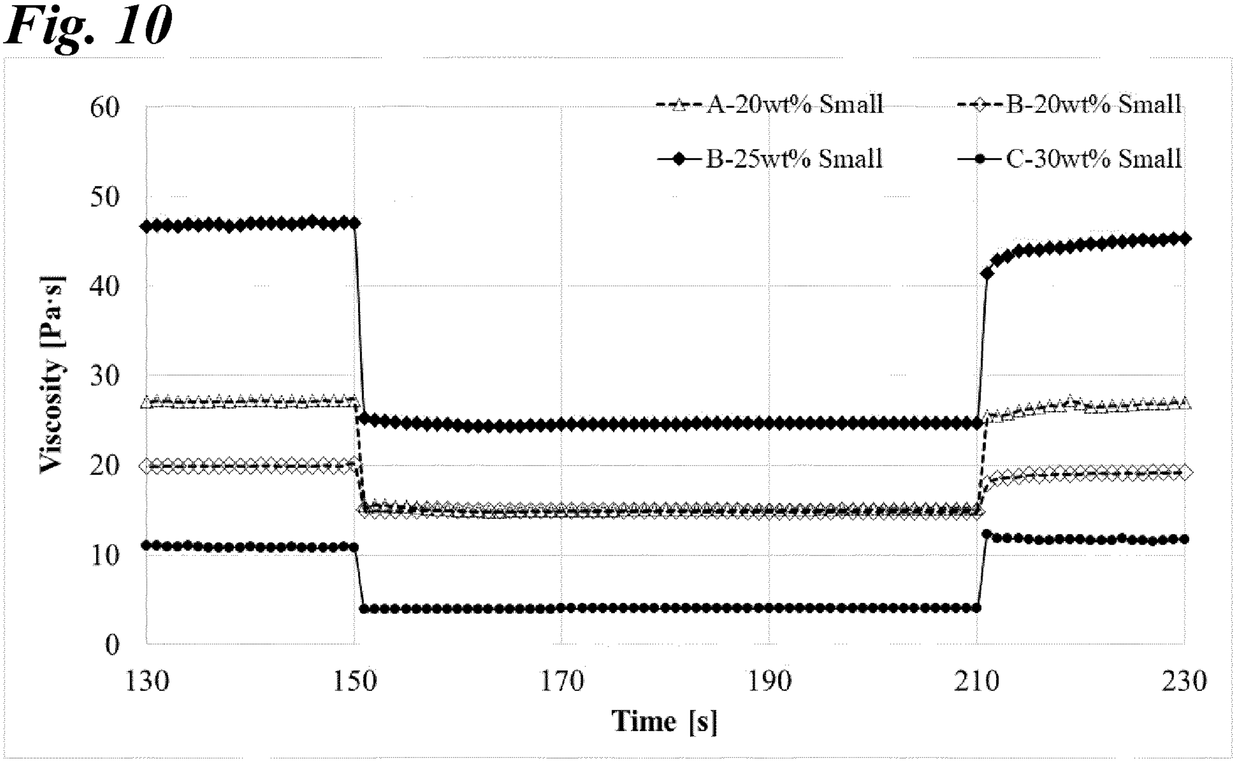
60
50
40
30
20
10
0
Viscosity [Pa·s]
130
150
170
190
210
230
Time [s]
A-20wt% Small
B-20wt% Small
B-25wt% Small
C-30wt% Small

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0682050 A1
- US 20190119432 A1
- US 4481076 A1

### Non-patent literature cited in the description

- **C. PAVIER et al.** *European Polymer Journal,* 2000, vol. 36, 1653-1658
- **Z. ZHENG et al.** *Int. J. Food Eng.,* 2016, vol. 12 (9), 911-919
- **I. DOMINGOS et al.** *Food and Bioproducts Processing,* 2019, vol. 115, 223-229
- **P.W. VAN DER POEL et al.** Sugar Technology. Verlag, 1998, 211